# EUROPÄISCHE PATENTSCHRIFT

(11) **EP 3 743 986 B1**
(45) Veröffentlichungstag und Bekanntmachung des Hinweises auf die Patenterteilung: **16.06.2021**
(21) Anmeldenummer: 19706866.1
(22) Anmeldetag: 28.01.2019
(51) Int. Cl.: H02K 15/00

(54) **BIEGEVORRICHTUNG ZUM VERBIEGEN VON AUS EINEM RINGFÖRMIGEN GEHÄUSE VORSTEHENDEN DRAHTENDEN UND DEMONTAGEVERFAHREN HIERFÜR**
BENDING DEVICE FOR BENDING WIRE ENDS PROJECTING FROM AN ANNULAR HOUSING AND DISASSEMBLING METHOD FOR THE DEVICE
DISPOSITIF DE PLIAGE POUR PLIER DES EXTRÉMITÉS DE FILS SAILLANTS D'UN LOGEMENT ANNULAIRE ET PROCÉDÉ DE DÉMONTAGE POUR LE DISPOSITIF

(30) Priorität: 21.02.2018 DE 102018103927
(43) Veröffentlichungstag der Anmeldung: 02.12.2020
(73) Patentinhaber: Grob-Werke GmbH & Co. KG, 87719 Mindelheim (DE)
(72) Erfinder: HAGGENMÜLLER, Tobias, 87647 Unterthingau (DE)
(74) Vertreter: KASTEL Patentanwälte PartG mbB
(86) Internationale Anmeldenummer: PCT/DE2019/100085
(87) Internationale Veröffentlichungsnummer: WO 2019/161832

(56) Entgegenhaltungen:
- WO-A1-2017/104685
- JP-A- 2004 282 947
- US-A1- 2013 025 737
- US-B2- 6 519 993

## Beschreibung

Die Erfindung betrifft eine Biegevorrichtung zum Verbiegen von aus einem ringförmigen Stator vorstehenden Drahtenden zum Bilden der Spulen des Stators umfassend:
eine erste Aufnahme- und Dreheinrichtung mit einer ersten Aufnahme- und Dreheinheit zum Aufnehmen von ersten Drahtenden und zum Verdrehen der ersten Drahtenden zwecks Verbiegen in Umfangsrichtung und einem ersten drehbar angetriebenen sich in Umfangsrichtung erstreckenden Antriebselement und eine zweite Aufnahme- und Dreheinrichtung mit einer zweiten Aufnahme- und Dreheinheit zum Aufnehmen von zu den ersten Drahtenden radial versetzten zweiten Drahtenden und zum Verdrehen der zweiten Drahtenden zwecks Verbiegen in Umfangsrichtung und einem zweiten drehbar angetriebenen sich in Umfangsrichtung erstreckenden Antriebselement. Außerdem betrifft die Erfindung ein Demontageverfahren zum Demontieren einer solchen Biegevorrichtung.

Die Biegevorrichtung ist insbesondere verwendbar in einer Drahtendenumformvorrichtung zur Verwendung bei einer Herstellung eines mit Spulen versehenen Bauteils in Form eines Stators einer elektrischen Maschine. Insbesondere ist die Biegevorrichtung verwendbar bei der Herstellung eines Stators einer elektrischen Maschine, wobei Hairpins in Nuten eines Gehäuses des Stators eingeführt werden und die frei stehenden Drahtenden zum Bilden von Spulenwicklungen miteinander verbunden werden sollen.

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei der Herstellung von Maschinenelementen derartiger elektrischer Maschinen, wie beispielsweise Statoren oder Rotoren, ist es oft erforderlich, Enden von aus Drähten gebildeten Leitern miteinander zu verbinden oder sonstwie gemeinsam zu verarbeiten, wie z.B. gemeinsam zu schneiden oder zu formen.

Zum Beispiel gibt es Elektromotoren, bei denen Spulenwicklungen, insbesondere des Stators, aus unterschiedlichen Drahtstücken gebildet werden, deren Enden dann miteinander verbunden werden. Insbesondere sind Vorrichtungen und Verfahren zum Verbinden von Drahtenden von Hairpins zum Bilden von Statorwicklungen von elektrischen Maschinen bekannt, bei denen die Drahtenden miteinander verschweißt werden. Hierbei sind Vorrichtungen und Verfahren zum Positionieren und Verspannen der Drahtenden vor dem Verschweißen vorgesehen.

Um die Drahtenden korrekt verschweißen zu können, ist es vorteilhaft, vorher die aus den einzelnen Nuten des Gehäuses des Bauteils, zum Beispiel nach dem Einfügen von Hairpins oder dergleichen, vorstehenden Drahtenden zunächst umzuformen, insbesondere zu weiten und zu verschränken, z.B. um so miteinander zu verbindende Drahtendenpaare zu bilden.

Drahtendenumformvorrichtungen mit einer Biegevorrichtung zum Verformen von aus einem Gehäuse eines Bauteils einer elektrischen Maschine vorstehenden Drahtenden in Umfangsrichtung sind beispielsweise aus der US 6 519 993 B2, der JP 2004 282947 A, der US 2013/025737 A1 und der WO 2017/104685 A1 bekannt. In der WO 2017/104685 A1 sind außerdem lösbare Verbindungen zwischen Aufnahme- und Dreheinheiten und zugeordneten Antriebseinheiten von Aufnahme- und Dreheinheiten bekannt.

Die Erfindung hat sich zur Aufgabe gestellt, eine leichter herstellbare und wartbare Biegevorrichtung zu schaffen.

Zum Lösen dieser Aufgabe schafft die Erfindung eine Biegevorrichtung nach Anspruch 1. Ein Demontageverfahren für eine derartige Biegevorrichtung ist in dem Nebenanspruch angegeben.

Vorteilhafte Ausgestaltungen sind Gegenstand der Unteransprüche.

Die Erfindung schafft gemäß einem Aspekt davon eine Biegevorrichtung zum Verbiegen von aus einem ringförmigen Stator vorstehenden Drahtenden zum Bilden der Spulen des Stators, umfassend: eine erste Aufnahme- und Dreheinrichtung mit einer ersten Aufnahme- und Dreheinheit zum Aufnehmen von ersten Drahtenden und zum Verdrehen der ersten Drahtenden zwecks Verbiegen in Umfangsrichtung und einem ersten drehbar angetriebenen sich in Umfangsrichtung erstreckenden Antriebselement, wobei die erste Aufnahme- und Dreheinheit über eine erste lösbare Verbindung mit dem ersten Antriebselement verbunden ist; eine zweite Aufnahme- und Dreheinrichtung mit einer zweiten Aufnahme- und Dreheinheit zum Aufnehmen von zu den ersten Drahtenden radial versetzten zweiten Drahtenden und zum Verdrehen der zweiten Drahtenden zwecks Verbiegen in Umfangsrichtung und einem zweiten drehbar angetriebenen sich in Umfangsrichtung erstreckenden Antriebselement, wobei die zweite Aufnahme- und Dreheinheit über eine zweite lösbare Verbindung mit dem zweiten Antriebselement verbunden ist; wobei die Aufnahme- und Dreheinheiten um eine gemeinsame Drehachse relativ zueinander drehbar sind und wobei die erste und die zweite lösbare Verbindung axial versetzt zueinander sind und jeweils sich radial erstreckende Verbindungsbrücken aufweisen, wobei die Verbindungsbrücken jeweils ein abtriebsseitiges Brückenelement an der Aufnahme- und Dreheinheit und ein antriebsseitiges Brückenelement an dem Antriebselement und wenigstens ein Verbindungselement zum lösbaren Verbinden dieser Brückenelemente aufweisen, wobei Durchgänge zwischen benachbarten Brückenelementen derart vorgesehen sind, dass in einer Montage- und Demontagerelativstellung der ersten und der zweiten Aufnahme- und Dreheinrichtung die Verbindungselemente der zweiten Aufnahme- und Dreheinrichtung durch die Durchgänge der ersten Aufnahme- und Dreheinrichtung hindurch zur Montage und Demontage zugänglich sind.

Es ist weiter vorgesehen, dass die abtriebsseitigen Brückenelemente an der zweiten Aufnahme- und Dreheinheit zur Montage und Demontage derselben in axialer Richtung durch die Durchgänge zwischen den antriebsseitigen Brückenelementen der ersten Aufnahme- und Dreheinrichtung hindurchführbar sind.

Es ist bevorzugt, dass die abtriebsseitigen Brückenelemente der zweiten Aufnahme- und Dreheinheit eine Erstreckung in Umfangsrichtung haben, die gleich oder kleiner als die entsprechende lichte Weite der Durchgänge zwischen den antriebsseitigen Brückenelementen der ersten Aufnahme- und Dreheinrichtung ist und dass die antriebsseitigen Brückenelemente der ersten Aufnahme- und Dreheinrichtung eine Erstreckung in Umfangsrichtung haben, die gleich oder kleiner als die entsprechende lichte Weite der Durchgänge zwischen den abtriebsseitigen Brückenelementen der zweiten Aufnahme- und Dreheinheit ist.

Es ist bevorzugt, dass die Biegevorrichtung eine dritte Aufnahme- und Dreheinrichtung mit einer dritten Aufnahme- und Dreheinheit zum Aufnehmen von zu den ersten und zweiten Drahtenden radial versetzten dritten Drahtenden und zum Verdrehen der dritten Drahtenden zwecks Verbiegen in Umfangsrichtung und einem dritten drehbar angetriebenen sich in Umfangsrichtung erstreckenden Antriebselement aufweist, wobei die dritte Aufnahme- und Dreheinheit über eine dritte lösbare Verbindung mit dem dritten Antriebselement verbunden ist, die eine Mehrzahl von lösbaren Verbindungselementen hat, wobei die zweite lösbare Verbindung axial zwischen der ersten lösbaren Verbindung und der dritten lösbaren Verbindung angeordnet ist und wobei die Durchlässe zwischen in Umfangsrichtung benachbarten Brückenelementen der ersten und der zweiten Aufnahme- und Dreheinrichtung und die Verbindungselemente der dritten Aufnahme- und Dreheinrichtung derart angeordnet sind, dass in einer zweiten Montage- und Demontagerelativdrehstellung der Aufnahme- und Dreheinrichtungen die Verbindungselemente der dritten Aufnahme- und Dreheinrichtung durch die miteinander ausgerichteten Durchlässe der ersten und der zweiten Aufnahme- und Dreheinrichtung hindurch zum Montieren und Demontieren zugänglich sind.

Es ist bevorzugt, dass die dritte Verbindung dritte Verbindungsbrücken aufweist, die jeweils ein abtriebsseitiges Brückenelement an der dritten Aufnahme- und Dreheinheit und ein antriebsseitiges Brückenelement an dem dritten Antriebselement und ein lösbares Verbindungselement zum Verbinden der Brückenelemente aufweisen, wobei Durchgänge zwischen in Umfangsrichtung benachbarten Brückenelementen vorgesehen sind.

Es ist bevorzugt, dass die Biegevorrichtung eine vierte Aufnahme- und Dreheinrichtung mit einer vierten Aufnahme- und Dreheinheit zum Aufnehmen von zu den ersten, zweiten und dritten Drahtenden radial versetzten vierten Drahtenden und zum Verdrehen der vierten Drahtenden zwecks Verbiegen in Umfangsrichtung und einem vierten drehbar angetriebenen sich in Umfangsrichtung erstreckenden Antriebselement aufweist, wobei die vierte Aufnahme- und Dreheinheit über eine vierte lösbare Verbindung mit dem vierten Antriebselement verbunden ist, die eine Mehrzahl von lösbaren Verbindungselementen hat, wobei die zweite und dritte lösbare Verbindung axial zwischen der ersten lösbaren Verbindung und der vierten lösbaren Verbindung vorgesehen sind und wobei die Durchlässe zwischen in Umfangsrichtung benachbarten Brückenelementen der ersten, zweiten und dritten Aufnahme- und Dreheinrichtung und die Verbindungselemente der vierten Aufnahme- und Dreheinrichtung derart angeordnet sind, dass in einer dritten Montage- und Demontagerelativdrehstellung der Aufnahme- und Dreheinrichtungen die Verbindungselemente der vierten Aufnahme- und Dreheinrichtung durch die miteinander ausgerichteten Durchlässe der ersten, zweiten und dritten Aufnahme- und Dreheinrichtung hindurch zum Montieren und Demontieren zugänglich sind.

Es ist bevorzugt, dass die lösbaren Verbindungen der Aufnahme- und Dreheinrichtungen gleichartig ausgestaltet sind.

Es ist bevorzugt, dass die Verbindungselemente Schrauben oder Gewindebolzen mit Werkzeugangriffsausbildungen aufweisen, wobei ein Werkzeugzugang zu den Werkezugangriffsausbildungen durch die Durchlässe der auf der Seite der Werkzeugangriffsausbildungen axial versetzt angeordneten Verbindung(en) zugänglich ist.

Es ist bevorzugt, dass die Brückenelemente durch sich radial erstreckende Vorsprünge oder Platten gebildet sind.

Es ist bevorzugt, dass die abtriebsseitigen Brückenelemente durch Anschraubflansche mit Bohrungen und die antriebsseitigen Brückenelemente durch Anschraubflansche mit Gewindebohrungen gebildet sind.

Es ist bevorzugt, dass die antriebsseitigen Brückenelemente axial versetzt zu den abtriebsseitigen Brückenelementen angeordnet sind.

Es ist bevorzugt, dass eine Anzahl abtriebsseitiger Brückenelemente ringförmig um die Aufnahme- und Dreheinheit angeordnet ist und die gleiche Anzahl antriebsseitiger Brückenelemente ringförmig entlang eines radial inneren Umfangs des Antriebselements angeordnet ist.

Es ist bevorzugt, dass die Brückenelemente und die Durchgänge dazwischen eine Zahnstruktur bilden, die eine gleiche Zahnteilung aufweist.

Es ist bevorzugt, dass die Aufnahme- und Dreheinheiten konzentrisch zueinander angeordnet und/oder ringförmig ausgebildet sind.

Es ist bevorzugt, dass die Antriebselemente als Antriebsringe ausgebildet sind.

Es ist bevorzugt, dass die Aufnahme- und Dreheinheiten Schränkkronen zum Aufnehmen und Verschränken der Drahtenden in Umfangsrichtung aufweisen, die ringförmig ausgebildet sind und über den Umfang verteilt mehrere Aufnahmeöffnungen zum Einführen der Drahtenden aufweisen.

Es ist bevorzugt, dass die Aufnahme- und Dreheinheit, die relativ zu einer anderen Aufnahme- und Dreheinheit gesehen Drahtendenaufnahmen mit kleinerem radialen Abstand zu der Drehachse hat, eine größere axiale Erstreckung als die andere Aufnahme- und Dreheinheit hat.

Es ist bevorzugt, dass die Biegevorrichtung eine Steuerung zum Steuern der Drehung der Antriebselemente aufweist, wobei die Steuerung einen Montage- und/oder Demontagemodus hat.

Es ist bevorzugt, dass in dem Montage- und/oder Demontagemodus die Antriebselemente in die wenigstens eine Montage- und Demontagerelativdrehstellung verfahren werden.

Es ist bevorzugt, in dem Montage- und/oder Demontagemodus die Antriebselemente schrittweise in unterschiedliche Montage- und Demontagerelativstellungen zum Montieren oder Demontieren unterschiedlicher Aufnahme- und Dreheinheiten bewegt werden.

Gemäß einem weiteren Aspekt schafft die Erfindung ein Demontageverfahren für die Biegevorrichtung nach einem der voranstehenden Ausgestaltungen, umfassend die Schritte:
a) Demontieren der ersten Aufnahme- und Dreheinheit durch Lösen der Verbindungselemente und Entfernen der ersten Aufnahme- und Dreheinheit,
b) Verfahren in eine Montage- und Demontagestellung, in der die Verbindungselemente der zweiten Aufnahme- und Dreheinrichtung zugänglich sind,
c) Lösen der Verbindungselemente der zweiten Aufnahme- und Dreheinrichtung in der Montage- und Demontagestellung und
d) Entfernen der zweiten Aufnahme- und Dreheinheit,
wobei die Reihenfolge zumindest der Schritte a) und b) beliebig ist.

Es ist bevorzugt, dass Schritt d) umfasst:
Entfernen der zweiten Aufnahme- und Dreheinheit in Richtung der Drehachse, wobei die abtriebsseitigen Brückenelemente durch die Durchgänge zwischen den antriebsseitigen Brückenelementen der ersten Aufnahme- und Dreheinrichtung hindurchgeführt werden.

Ein bevorzugtes Einsatzgebiet für die voranstehend beschriebenen Vorrichtungen gemäß der Erfindung oder deren vorteilhaften Ausgestaltungen ist die Herstellung von mit Spulen versehenen Bauteilen einer elektrischen Maschine und mehr insbesondere die Herstellung von Statoren von elektrischen Maschinen und mehr insbesondere die Herstellung von Statoren von Elektromotoren, die als Fahrmotoren für Elektrokraftfahrzeuge verwendbar sind, insbesondere im Leistungsbereich von 10kW bis 400 kW. Die Vorrichtungen der vorliegenden Erfindung sowie deren vorteilhafte Ausgestaltungen sind insbesondere auf dem Gebiet der Herstellung von Elektromotoren oder sonstigen elektrischen Maschinen, wie beispielsweise Generatoren, die für hohe Leistungen, zuverlässigen Betrieb und hohe Effizienz ausgelegt sind, geeignet und einsetzbar. Insbesondere sollen Elektromotoren hergestellt werden, die als Fahrmotoren von Elektrofahrzeugen oder Hybridfahrzeugen einsetzbar sind und beispielsweise eine Nennleistung zwischen 20 kW und 400 kW aufweisen. Es ist zum Aufbau von Statoren derartiger leistungsfähiger elektrischer Maschinen vorteilhaft, eine möglichst hohe Spulendichte bereitzustellen. Insbesondere werden hierzu sogenannte Hairpins in Nuten eines Statorgehäuses eingefügt, welche Nuten zuvor mit einer Nutisolierung, insbesondere Nutisolationspapier, ausgekleidet worden sind. Anschließend werden die freien Drahtenden in radialer Richtung umgeformt - geweitet/"Weiten" - und in Umfangsrichtung umgeformt - "Schränken"-, um Paare miteinander zu verbindender, insbesondere zu verschweißender Drahtenden, zu formen, so dass dann geschlossene Spulenwicklungen erzeugbar sind. Vorzugsweise werden hierzu Drähte verwendet, die im Querschnitt nicht rund, sondern rechteckig ausgebildet sind. Die hier vorgeschlagenen Vorrichtungen und Verfahren sowie Verwendungen haben den Vorteil, dass die Umbiegung exakter und kontrollierter erfolgen kann.

Die hier dargestellte Biegevorrichtung ist insbesondere im Zuge des Prozesses "Schränken" verwendbar, um Drahtenden in Umfangsrichtung zu verbiegen. So sollen beispielsweise zu verbindende Paare von Drahtenden zueinander geführt werden, die in späteren Prozessen im Zuge der Herstellung des Bauteils miteinander verbunden, insbesondere miteinander verschweißt werden sollen.

Dieses Umbiegen ist mit nicht unerheblichen Kräften verbunden, so dass die Werkzeuge zum Umbiegen, z.B. Schränkkronen, einer nicht unerheblichen Belastung ausgesetzt sind. Es ist daher wünschenswert, die Biegevorrichtung so zu gestalten, dass Schränkkronen oder dergleichen Werkzeuge der Biegevorrichtung leicht zur Herstellung, Instandhaltung oder Wartung montiert und/oder demontiert werden können.

Z.B. werden beim Schränken eines Stators die Drähte in Umfangsrichtung z.B. durch Drehen von Schränkkronen gebogen. Die Anzahl der Schränkkronen richtet sich meist nach der Anzahl der Drähte pro Nut. Ziel des Schränkens ist das Biegen der Drähte auf die richtige Position, um anschließend die Drahtenden verschweißen zu können. Durch das Verschweißen der Drahtenden ergibt sich die Verschaltung des Stators.

Zum Schränken eines Stators werden z.B. Schränkkronen verwendet. Diese nehmen die Drähte des Stators auf und verschränken diese. Dafür wird ein hohes Drehmoment über eine Aufnahmeplatte über Reibschluss auf die Schränkkronen übertragen. Die Reibung zwischen Draht und den Schränkkronen erzeugt einen Verschleiß. Nach dem Erreichen der Verschleißgrenze sollten die Schränkkronen mit möglichst geringem Aufwand gewechselt werden können. Hierzu liefern bevorzugte Ausgestaltungen der Erfindung eine elegante Lösung.

Bevorzugte Ausgestaltungen der Erfindung betreffen die Geometrie der Schränkkronen oder dergleichen Dreh- und Aufnahmeeinheiten und z.B. als Aufnahmeplatte ausgebildeten Antriebseinheit. Die Geometrie ist derart ausgebildet, dass sie einen schnellen Wechsel der Schränkkronen ermöglicht. Vorzugsweise ist hierzu an der Schränkkrone eine Vielzahl von Anschraubflanschen mit Bohrungen ringförmig angeordnet. Vorzugsweise ist an der Aufnahmeplatte ist die gleiche Anzahl von Anschraubflanschen mit Gewinden ringförmig angeordnet.

Vorteile einer bevorzugten Ausgestaltung gegenüber anderen Ausführungen ist die verschleißfreie Drehmomentübertragung über Reibschluss. Des Weiteren kann die Aufnahmeplatte für alle Schränkkronen gleich sein. Die Schränkkronen können leicht montiert und demontiert werden.

Vorzugsweise ist die Aufnahmeplatte drehbar auf einer Grundplatte gelagert. Die jeweilige Schränkkrone ist über einen Zentrierring und Passstift ausgerichtet und wird vorzugsweise über Reibschluss von Schrauben verdrehgesichert. Es wird über einen Antrieb ein Moment auf die Aufnahmeplatte eingeleitet. Wenn mehrere Schränkkronen eingesetzt werden wird der Aufbau mit Aufnahmeplatte und einer Grundplatte mehrmals verwendet. Z.B. kann ein Aufbau einer Schränkstation mit sechs Schränkkronen vorgesehen sein.

Im Folgenden wird ein vorteilhafter Ablauf zum Demontieren einer bevorzugten Biegevorrichtung näher erläutert. Zuerst werden alle Schränkkronen auf die Demontageposition gedreht. Anschließend wird die oberste Schränkkrone demontiert. Diese ist gut zugänglich. Zur Demontage der zweiten darunterliegenden Schränkrone wird die erste (oberste) Schränkkrone auf eine Passivposition gedreht. Somit sind nun die Schrauben oder dergleichen der zweiten Schränkkrone zugänglich. Außerdem können nun die Anschraubflansche der zweiten Schränkkrone durch die Lücken der Anschraubflansche der ersten Aufnahmeplatte gezogen werden. Zum Demontieren weiterer Schränkkronen wird der Vorgang dementsprechend wiederholt.

Ausführungsbeispiele der Erfindung werden im Folgenden anhand der beigefügten Zeichnungen näher erläutert. Darin zeigt:
Fig. 1 eine schematische Blockdarstellung eines Ausführungsbeispiels für eine Bauteilherstellvorrichtung zum Herstellen eines mit Spulen versehenen Bauteils einer elektrischen Maschine;
Fig. 2 eine schematische Darstellung eines Gehäuses des mit Spulen versehenen Bauteils vor einem Drahtumformverfahren;
Fig. 3 einen Schnitt durch das Gehäuse wie in Fig. 2 nach einem Umformen von Drahtenden in radialer Richtung und vor einem Umformen der Drahtenden in Umfangsrichtung;
Fig. 4 eine Draufsicht auf einen Teilbereich des Gehäuses von oben in Fig. 2 gesehen, wobei eine Nut des Gehäuses mit darin untergebrachten Drahtsegmenten, an denen Drahtenden ausgebildet sind, dargestellt ist;
Fig. 5 eine Darstellung vergleichbar mit Fig. 5, wobei eine Klemmvorrichtung an den Drahtenden zum Verklemmen derselben angreift;
Fig. 6 eine schematische Übersichtsdarstellung eines Ausführungsbeispiels einer Drahtendenumformvorrichtung, die eine Radial-Drahtendenumformvorrichtung zum Umformen der Drahtenden in radialer Richtung mit einer Radial-Biegevorrichtung und mit der Klemmvorrichtung sowie eine Umfangs-Drahtendenumformvorrichtung zum Umformen der Drahtenden in Umfangsrichtung mit einer Umfangs-Biegevorrichtung und der Klemmvorrichtung aufweist;
Fig. 7 eine perspektivische Darstellung eines ersten Ausführungsbeispiels der Klemmvorrichtung;
Fig. 8 eine vergrößerte Draufsicht auf ein Detail der Klemmvorrichtung von Fig. 7;
Fig. 9 eine Draufsicht auf ein zweites Ausführungsbeispiel der Klemmvorrichtung;
Fig. 10 eine perspektivische Ansicht des zweiten Ausführungsbeispiels der Klemmvorrichtung;
Fig. 11 einen Schnitt durch die Klemmvorrichtung gemäß dem zweiten Ausführungsbeispiel entlang der Linie A-A von Fig. 9;
Fig. 12 eine perspektivische Ansicht eines Ausführungsbeispiels für die Radial-Biegevorrichtung;
Fig. 13 eine Draufsicht auf das Ausführungsbeispiel der Radial-Biegevorrichtung;
Fig. 14 eine perspektivische Darstellung eines Ausführungsbeispiels einer Greifereinheit mit einer der Radial-Biegevorrichtung von Fig. 12 und 13;
Fig. 15 eine perspektivische Darstellung eines Ausführungsbeispiels der Umfangs-Biegevorrichtung;
Fig. 16 eine Draufsicht auf die Umfangs-Biegevorrichtung von Fig. 15;
Fig. 17 ein Diagramm, bei der die Relativgeschwindigkeit zwischen einem Gehäuse und der Umfangs-Biegevorrichtung über die Zeit schematisch aufgetragen ist;
Fig. 18 ein Diagramm, zur gleichen Zeit wie Fig. 17 aufgenommen, wobei schematisch Drehgeschwindigkeiten einer ersten bis vierten Aufnahme- und Dreheinheit der Umfangs-Biegevorrichtung vereinfacht dargestellt sind;
Fig. 19 eine perspektivische Darstellung einer vierten Aufnahme- und Dreheinheit der Umfangs-Biegevorrichtung, wobei ein Ringelement zum Bilden von Drahtendenaufnahmen zu Erläuterungszwecken weggelassen worden ist;
Fig. 20 eine Seitenansicht einer ersten Aufnahme- und Dreheinheit;
Fig. 21 einen Schnitt durch die erste Aufnahme- und Dreheinheit entlang der Linie B-B von Fig. 20;
Fig. 22 eine perspektivische Ansicht der ersten Aufnahme- und Dreheinheit;
Fig. 23 eine Explosionsdarstellung in Seitenansicht der ersten Aufnahme- und Dreheinheit, wobei ein Hauptelement und ein Ringelement entfernt voneinander dargestellt sind;
Fig. 24 eine perspektivische Explosionsdarstellung der ersten Aufnahme- und Dreheinheit;
Fig. 25 eine perspektivische Darstellung einer ineinander geschachtelten Kombination aus der ersten Aufnahme- und Dreheinheit, einer zweiten Aufnahme- und Dreheinheit, einer dritten Aufnahme- und Dreheinheit und der vierten Aufnahme- und Dreheinheit;
Fig. 26 einer Seitenansicht der Kombination von Fig. 25;
Fig. 27 einen Schnitt durch die Kombination entlang der Linie A-A von Fig. 26;
Fig. 28 einen Schnitt durch eine Kombination einer ersten bis sechsten Aufnahme- und Dreheinrichtung der Umfangs-Biegevorrichtung der Figuren 15 und 16, wobei jede Aufnahme- und Dreheinrichtung eine Aufnahme- und Dreheinheit und ein sich in Umfangsrichtung erstreckendes Antriebselement aufweist, in einer Betriebsstellung, wobei ein Schnitt entlang der Linie B-B von Fig. 29 dargestellt ist;
Fig. 29 eine Draufsicht auf die Kombination der Fig. 28;
Fig. 30 die Kombination vergleichbar der Figuren 28 und 29, wobei eine erste Aufnahme- und Dreheinheit entfernt ist, gezeigt im Schnitt entlang der Linie C-C von Fig. 31;
Fig. 31 eine Draufsicht auf die Kombination mit der bereits entfernten ersten Aufnahme- und Dreheinheit von Fig. 30;
Fig. 32 die Kombination der Figuren 30 und 31 mit entfernter erster Aufnahme- und Dreheinheit, jedoch in einer Montage- und Demontagestellung zum Montieren oder Demontieren der zweiten Aufnahme- und Dreheinheit, gezeigt im Schnitt entlang der Linie D-D von Fig. 33 und
Fig. 33 eine Draufsicht auf die Kombination der Fig. 32 in der Montage- und Demontagestellung.

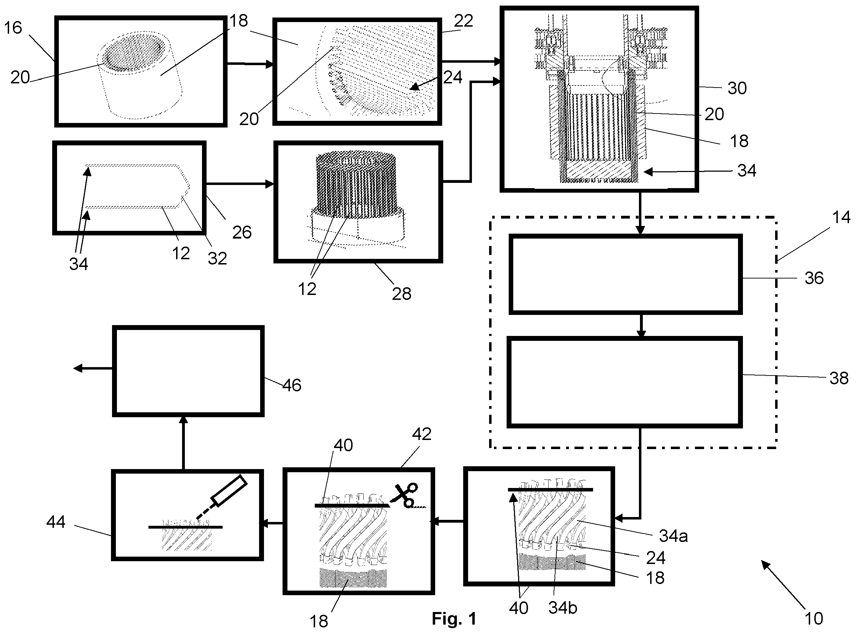

In Fig. 1 ist ein Ausführungsbeispiel für eine Bauteilherstellvorrichtung 10 zum Herstellen eines mit Spulen versehenen Bauteils einer elektrischen Maschine als Blockdarstellung dargestellt, wodurch auch Herstellschritte eines entsprechenden Bauteilherstellverfahren zum Herstellen des Bauteils veranschaulicht werden.

Die Bauteilherstellvorrichtung 10 ist zum Herstellen eines Stators einer elektrischen Maschine geeignet. Der Stator soll insbesondere als Stator eines Fahrmotors eines Elektrofahrzeuges, vorzugsweise im Leistungsbereich von 20 kW bis 400 kW eingesetzt werden. Hierzu soll der Stator eine möglichst große Anzahl von Spulen erhalten, wobei die Spulen aus sogenannten Hairpins 12 erzeugt werden.

Bei der dargestellten Ausführungsform weist die Bauteilherstellvorrichtung 10 eine Drahtendenumformvorrichtung 14 sowie vorzugsweise eine oder mehrere oder alle der im Folgenden näher bezeichneten zusätzlichen Stationen auf.

Vorzugsweise weist die Bauteilherstellvorrichtung 10 eine Gehäuseherstellvorrichtung 16 zum Herstellen eines Gehäuses 18 des beispielsweise als Stator ausgebildeten Bauteils auf. Die Gehäuseherstellvorrichtung 16 ist z. B. in grundsätzlich bekannter Art und Weise ausgebildet, um das Gehäuse 18 als Blechpaket aus einzelnen Blechlagen herzustellen, wobei das Gehäuse 18 ringförmig ausgebildet ist und an einem Innenwandbereich mit einer Reihe von verteilt an der Innenwandung ausgebildeten Gehäusenuten 20 versehen ist, die zur Aufnahme von Drahtsegmenten dienen.

Vorzugsweise weist die Bauteilherstellvorrichtung 10 eine Vorrichtung 22 zum Herstellen von Nutisolierungen auf, mittels der die einzelnen Gehäusenuten 20 mit einer Nutisolierung 24, vorzugsweise aus Isolationspapier versehen werden. Die Vorrichtung zum Herstellen von Nutisolierungen 22 ist vorzugsweise in der in der deutschen Patentanmeldung DE 10 2017 129 474.0 näher beschriebenen Art und Weise ausgeführt, wobei für weitere Einzelheiten ausdrücklich auf diese deutsche Patentanmeldung DE 10 2017 129 474.0 verwiesen wird.

Die Bauteilherstellvorrichtung 10 weist weiter eine Hairpinherstellvorrichtung 26 zum Herstellen der Hairpins 12 auf. Die Hairpinherstellvorrichtung 26 kann z. B. (nicht dargestellte) Schneideinrichtungen zum Abschneiden von Drahtstücken einer Drahtspule sowie nicht näher dargestellte Biegeeinrichtungen zum Biegen einer Dachbiegung und/oder Knickbiegung und/oder 3-dimensionalen Biegung der Hairpins 12 aufweisen.

Vorzugsweise weist die Bauteilherstellvorrichtung 10 eine Vorpositionierungsvorrichtung 28 zum Vorpositionieren der Hairpins 12 sowie eine Hairpineinsteckvorrichtung 30 zum Einstecken der so vorpositionierten Hairpins 12 in die Gehäusenuten 20 des Gehäuses 18 auf.

Mögliche Ausführungen der Vorpositionierungsvorrichtung 28 sowie der Hairpin-Einsteckvorrichtung 30 sind näher in der deutschen Patentanmeldung DE 10 2017 113 617.7 gezeigt und beschrieben, aufweiche für weitere Einzelheiten ausdrücklich verwiesen wird.

Wie bei der Hairpinherstellvorrichtung 26 angedeutet, haben die Hairpins 12 einen gebogenen Wicklungskopf 32 sowie zwei freie Drahtenden 34, wobei sie bis auf den äußersten Endbereich an jedem Drahtende 34 mit einer Isolierung, beispielsweise einem Kunststoffüberzug, versehen sind. Nach dem Hairpin einstecken mittels der Hairpineinsteckvorrichtung 30 stehen die Drahtenden 34 an einem Ende des Gehäuses 18 aus den Gehäusenuten 20 vor.

Die Drahtendenumformvorrichtung 14 dient zum Durchführen eines Weitprozesses, wo die einzelnen Drahtenden 34 in radialer Richtung aufgeweitet werden und zum Durchführen eines Schränkprozesses, wobei die so aufgeweiteten Drahtenden 34 in Umfangsrichtung umgeformt werden, um so jeweils Paare von miteinander zu verbindenden Drahtenden 34 zu bilden.

Hierzu weist die Drahtendenumformvorrichtung 14 eine Radial-Drahtendenumformvorrichtung 36 und eine Umfangs-Drahtendenumformvorrichtung 38 auf.

Die Bauteilherstellvorrichtung 10 kann weiter eine Vorspann- und/oder Fixiervorrichtung 40 zum Vorspannen und/oder Fixieren der einzelnen Paare von Drahtenden 34 aufweisen. Ein Ausführungsbeispiel der Vorspann- und Fixiervorrichtung 40 ist in der deutschen Patentanmeldung DE 10 2017 114 932.5 gezeigt und beschrieben, auf die für weitere Einzelheiten ausdrücklich verwiesen wird.

Die Bauteilherstellvorrichtung 10 kann weiter eine Drahtendenschneidvorrichtung 42 zum Schneiden der mit der Vorspann- und/oder Fixiervorrichtung 40 verspannten und fixierten Drahtenden umfassen.

Ein Ausführungsbeispiel der Bauteilherstellvorrichtung 10 weist weiter eine Drahtendenschweißvorrichtung 44 zum Verschweißen der zum Bilden der Spulen miteinander zu verbindenden Drahtenden 34 auf.

Weiter kann die Bauteilherstellvorrichtung 10 Vorrichtungen 46 zum elektrischen Kontaktieren der durch die Hairpins 12 so gebildeten Spulen und/oder zum Testen und/oder Vergießen des so gebildeten Stators umfassen.

Im Folgenden werden Ausführungsbeispiele der Drahtendenumformvorrichtung 14 der Bauteilherstellvorrichtung 10 näher erläutert.

Bei der Bauteilherstellvorrichtung 10 gemäß dem in Fig. 1 dargestellten Ausführungsbeispiel wird zu der Herstellung eines Stators als Beispiel für das Bauteil zunächst ein Gehäuse 18 mit Gehäusenuten 20 und darin untergebrachte Nutisolierungen 24 bereitgestellt; gleichzeitig werden Leiter in Form von Hairpins 12 hergestellt. Die Leiter in Form von Hairpins 12 werden anschließend in das Blechpaket des Gehäuses 18 eingefügt.

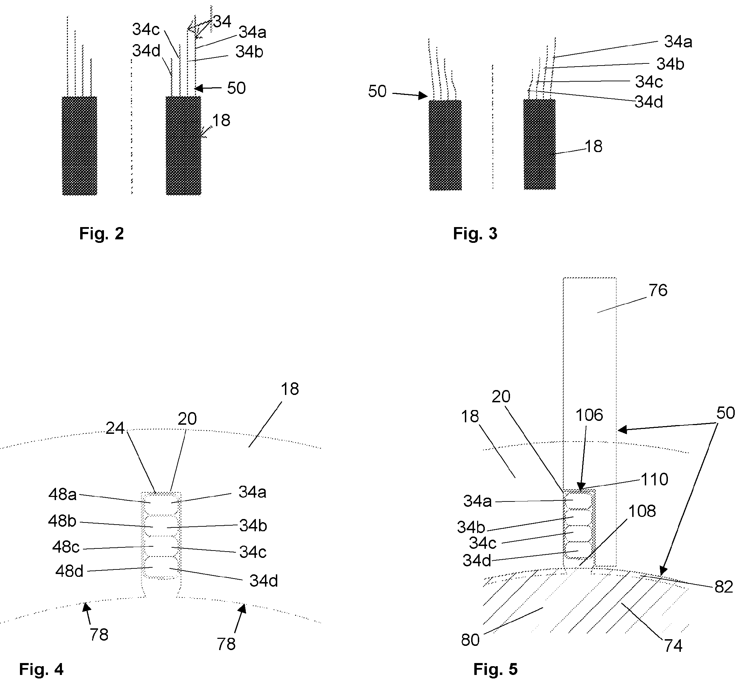

Anschließend erfolgt ein Drahtendenumformverfahren mittels der Drahtendenumformvorrichtung 14. Der Ausgangszustand für das Drahtendenumformverfahren ist in Fig. 2 dargestellt. In der Schnittdarstellung in der Fig. 2 ist ein Zwischenprodukt zum Herstellen des Stators in vereinfachter Darstellung, insbesondere ohne Darstellung des Wickelkopfs, gezeigt. In einem ersten Teilprozess des Drahtendenumformverfahrens werden die Leiterenden
- Drahtenden 34 - radial so umgeformt, wie sie in der Fig. 3 dargestellt sind. Dieser Teilprozess wird auch "Weiten" genannt. Hierzu weist die Drahtendenumformvorrichtung 14 die Radial-Drahtendenumformvorrichtung 36 auf.

Fig. 4 zeigt hierzu die Draufsicht von oben in Fig. 2 gesehen auf eine der Gehäusenuten 20. Bei dem dargestellten Ausführungsbeispiel sind insgesamt vier Drahtsegmente 48a-48d mit entsprechenden aus der Gehäusenut 20 vorstehenden vier Drahtenden 34a-34d dargestellt. Das Drahtendenumformverfahren sowie die hierzu vorgesehenen Drahtendenumformvorrichtungen 14, 36, 38 sind entsprechend auf diesen Beispielsfall mit vier Drahtenden 34a-34d pro Gehäusenut 20 ausgebildet. Bei anderen, nicht näher dargestellten Ausführungsformen sind beispielsweise 2, 3, 6, 8 oder mehr oder weniger Drahtenden 34 pro Nut vorgesehen, wobei die Anzahl der entsprechenden Handhabungselemente, wie sie im Folgenden noch näher dargestellt werden, entsprechend angepasst sind.

Für die auf den Weit-Prozess nachfolgenden automatisierten Prozesse sollten die Drahtenden 34a-34d so umgeformt werden, dass deren Position innerhalb eines vordefinierten Toleranzfeldes liegt. Damit die Drahtenden 34a-34d reproduktiv umgeformt werden können, werden sie an ihrem freien Ende und am Fuß - der oberen Kante des Gehäuses 18 - gespannt.

Hierzu ist eine Klemmvorrichtung 50 vorgesehen, von denen Ausführungsbeispiele in den Fig. 5 und 7-11 dargestellt sind.

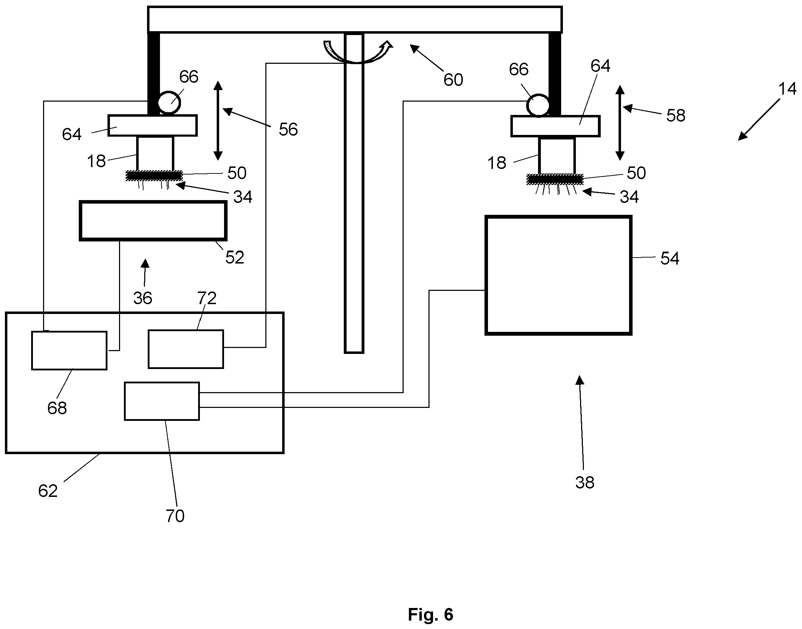

Ein Ausführungsbeispiel für die Drahtendenumformvorrichtung 14 ist schematisch in Fig. 6 dargestellt. Demnach weist ein Ausführungsbeispiel der Drahtendenumformvorrichtung 14 die Klemmvorrichtung 50 und wenigstens eine Biegevorrichtung 52, 54 auf.

Die dargestellte Drahtenden-Umformvorrichtung 14 weist wenigstens zwei Stationen, eine erste Station zum radialen Umformen der Drahtenden 34a-34d und eine zweite Station zum Umformen der Drahtenden 34, 34a-34d in Umfangsrichtung auf. Diese beiden Stationen werden hier als Radial-Drahtendenumformvorrichtung 36 und Umfangs-Drahtendenumformvorrichtung 38 bezeichnet.

Die Radial-Drahtendenumformvorrichtung 36 weist eine Radial-Biegevorrichtung 52 zum Verbiegen der Drahtenden 34, 34a-34d in radialer Richtung auf.

Die Umfangs-Drahtendenumformvorrichtung 38 weist eine Umfangs-Biegevorrichtung 54 zum Umformen der vorzugsweise bereits radial aufgeweiteten Drahtenden 34, 34a-34d in Umfangsrichtung auf. Weiter weisen beide Stationen 36, 38 jeweils die Klemmvorrichtung 50 auf.

Vorzugsweise weisen die Drahtendenumformvorrichtungen 14, 36, 38 jeweils eine Relativbewegungsvorrichtung 56, 58 auf, um das Gehäuse 18 relativ zu der jeweiligen Biegevorrichtung 52, 54 in einer axialen Richtung zu bewegen. Als "axiale Richtung" wird hierzu eine Bewegung in Richtung längs zu der Mittelachse des ringförmigen Gehäuses 18 verstanden. Auch die Radialrichtung und die Umfangsrichtung sind jeweils bezüglich dieser Mittelachse des Gehäuses 18 definiert.

Eine erste Relativbewegungsvorrichtung 56 ist zusammen mit der Radial-Biegevorrichtung 52 und der Klemmvorrichtung 50 an der Radial-Drahtendenumformvorrichtung 36 ausgebildet. Eine zweite Relativbewegungsvorrichtung 58 ist zusammen mit der Umfangs-Biegevorrichtung 54 und der Klemmvorrichtung 50 an der Umfangs-Drahtendenumformvorrichtung 38 ausgebildet. Weiter weist die Drahtendenumformvorrichtung 14 eine Transportvorrichtung 60 zum Transport des Gehäuses 18 von der Radial-Drahtendenumformvorrichtung 36 zu der Umfangs-Drahtendenumformvorrichtung 38 und eine Steuerungsvorrichtung 62 zum Steuern der einzelnen Einheiten der Drahtendenumformvorrichtung 14 auf.

Die Transportvorrichtung 60 kann in irgendeiner Form ausgebildet sein. In dem dargestellten Ausführungsbeispiel weist die Transportvorrichtung 60 eine Art Karussell mit mehreren Armen auf, an denen die Relativbewegungsvorrichtungen 56, 58 ausgebildet sind. Die Transportvorrichtung 60 und die Relativbewegungsvorrichtungen 56, 58 können durch einen Roboter oder eine Portalmaschine gebildet sein.

Die Relativbewegungsvorrichtungen 56, 58 weisen jeweils eine Gehäusehalterung 64, an der das Gehäuse 18 mit nach unten hin gerichteten vorstehenden Drahtenden 34, 34a-34d gehalten ist und einen Gehäusehalterungsantrieb 66 auf, mittels dem die Gehäusehalterung 64 relativ zu der jeweiligen Biegevorrichtung 52, 54 in axialer Richtung angetrieben bewegbar ist, auf. Bei anderen Ausgestaltungen, die derzeit weniger bevorzugt sind, wird das Gehäuse 18 stationär gehalten und die Biegevorrichtung 54 oder 56 axial bewegt.

Die Steuerungsvorrichtung 62 weist eine erste Steuerung zum Steuern der Radial-Drahtendenumformvorrichtung 36 auf, welche den Gehäusehalterungsantrieb 66 der ersten Relativbewegungsvorrichtung 56 und die Radial-Biegevorrichtung 52 ansteuert. Weiter weist die Steuerungsvorrichtung 62 eine zweite Steuerung 70 auf, welche den Gehäusehalterungsantrieb 66 der zweiten Relativbewegungsvorrichtung 58 und die Umfangs-Biegevorrichtung 54 ansteuert. Bei dem dargestellten Ausführungsbeispiel weist die Steuerungsvorrichtung 62 eine dritte Steuerung 72 auf, welche die Transportvorrichtung 60 ansteuert. Die Steuerungsvorrichtung 62 kann lokal an der Drahtendenumformvorrichtung 14 vorgesehen sein oder auch Teil einer Zentralsteuerung (nicht dargestellt) der Bauteilherstellvorrichtung 10 sein. Die einzelnen Steuervorrichtungen 68, 70, 72 können in Hardware oder in Software implementiert sein.

Die Klemmvorrichtung 50 wird vorzugsweise sowohl beim radialen Umformen der Drahtenden in der Radial-Drahtendenumformvorrichtung 36 als auch beim Umformen der Drahtenden 34, 34a-34d in Umfangsrichtung in der Umfangs-Drahtendenumformvorrichtung 38 verwendet. Hierzu kann die Klemmvorrichtung 50 mittels der Transportvorrichtung 60 gemeinsam mit dem Gehäuse 18 von der Radial-Drahtendenumformvorrichtung 36 zu der Umfangs-Drahtendenumformvorrichtung 38 weiter transportiert werden. Die Klemmvorrichtung 50 kann beispielsweise auch an der Gehäusehalterung 64 angebracht oder Teil derselben sein. In einigen Ausführungsformen ist die Klemmvorrichtung 50 als gesondertes Bauteil vorgesehen.

Wie in Fig. 6 dargestellt, ist im Betrieb die Klemmvorrichtung 50 zwischen dem Gehäuse 18 und der jeweiligen Biegevorrichtung 52, 54 angeordnet.

Die Klemmvorrichtung 50 weist, wie dies in Fig. 5 angedeutet ist eine erste Klemmvorrichtung 74, die vorzugsweise als innere Klemmeinrichtung ausgebildet ist und eine zweite Klemmeinrichtung 76, die vorzugsweise als äußere Klemmeinrichtung ausgebildet ist, auf.

Die erste Klemmeinrichtung 74 ist vorzugsweise teilweise im Inneren des Gehäuses 18 angeordnet und stützt sich weiter vorzugsweise an Innenwandbereichen 78 (siehe Fig. 5) ab, die im Inneren des Gehäuses 18 zwischen den Gehäusenuten 20 ausgebildet sind.

Die zweite Klemmeinrichtung 76 ist relativ zu der ersten Klemmeinrichtung 74 bewegbar, um Drahtenden 34, 34a-34d zwischen den Klemmeinrichtungen 74, 76 zu verklemmen. Vorzugsweise werden dabei alle gemeinsam aus einer Gehäusenut 20 vorstehenden Drahtenden 34, 34a-34d zwischen den Klemmeinrichtungen 74, 76 verklemmt.

Ein erstes Ausführungsbeispiel der Klemmvorrichtung 50 wird im Folgenden anhand der Fig. 5, 7 und 8 näher erläutert.

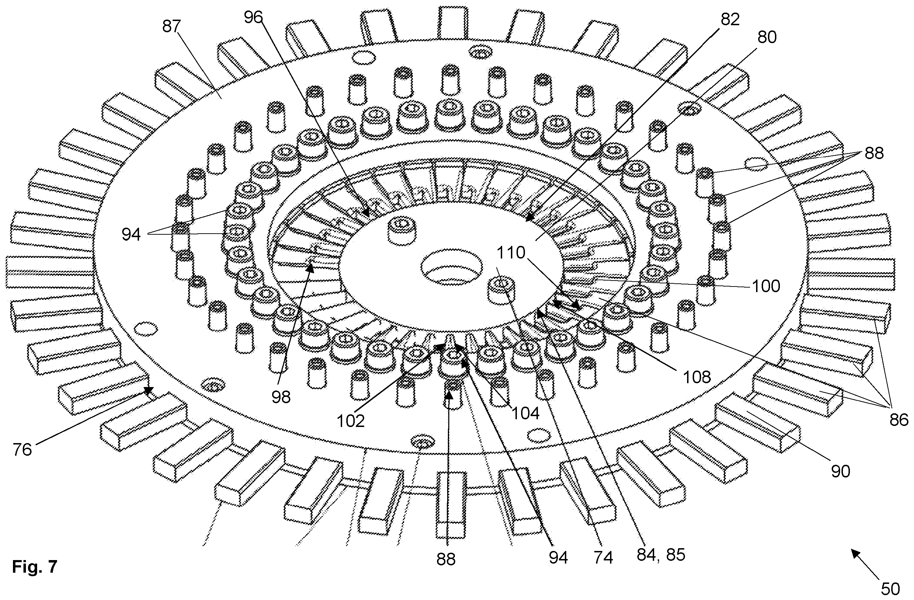

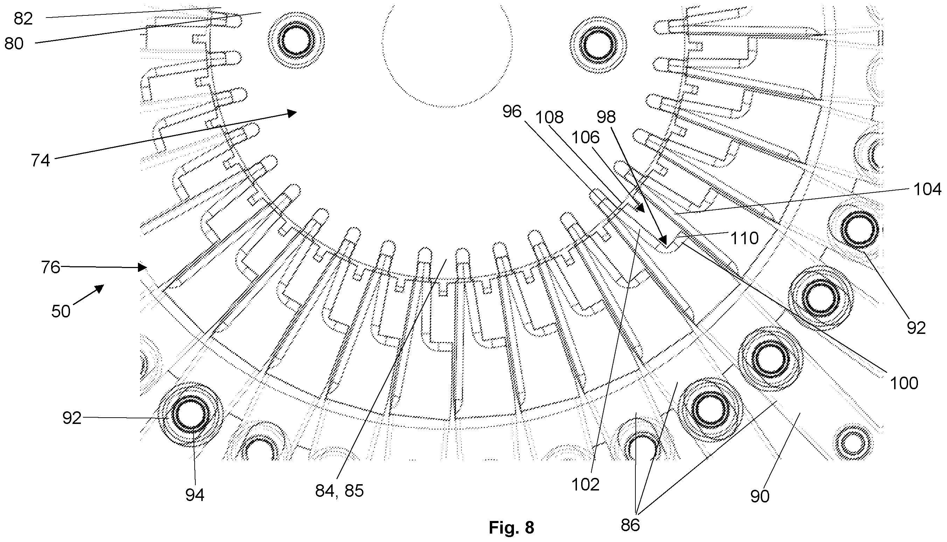

Bei dieser Ausführungsform ist die erste Klemmeinrichtung 74 scheibenförmig oder ringförmig ausgebildet. Die erste Klemmeinrichtung 74 weist einen Ringscheibenkörper 80 auf, der mit einem ersten Teilbereich in das Gehäuse eingefügt ist und sich vorzugsweise an den Innenwandbereichen 78 abstützt oder relativ zu diesen fixiert ist. Hierzu kann der Ringscheibenkörper 80 beispielsweise in dem ringförmigen Gehäuse 18 mittels eines nicht näher dargestellten Gegenspannelements an dem gegenüberliegenden Ende des Gehäuses axial verspannt sein. Beispielsweise kann das Gegenspannelement als Teil der Gehäusehalterung 64 ausgebildet sein. Ein weiterer Teilbereich des Ringscheibenkörpers 80 steht, wie dies in Fig. 5 angedeutet ist, aus dem Ende des Gehäuses 18 hervor und stützt sich mit einem Ringflansch 82 an diesem Ende des Gehäuses 18 ab. Dieser vorstehende Teilbereich des Ringscheibenkörpers 80 ist, wie dies in den Fig. 7 und 8 dargestellt ist, mit einer Reihe von über den Umfang verteilten Aussparungen 84 versehen, die als Spitzenaufnahmen 85 dienen. Die Anzahl der Aussparungen 84 entspricht der Anzahl von Gehäusenuten 20 an dem Gehäuse 18. Die Aussparungen 84 sind radial nach außen hin offen.

Die zweite Klemmeinrichtung 76 weist eine Anzahl von Kragenstützwerkzeugen in Form von Klemmfingern 86 auf. Weiter weist die zweite Klemmeinrichtung 76 in dem dargestellten Ausführungsbeispiel einen Haltering 87 auf, an dem die Klemmfinger 86 gemeinsam und synchron angetrieben und radial verschiebbar geführt aufgenommen sind.

Die Klemmfinger 86 sind jeweils stabförmig ausgebildet und sind mit einem Bereich in dem Haltering 87 aufgenommenen. Die Klemmvorrichtung kann z.B. als Handvorrichtung ohne Antrieb ausgebildet sein. Hierbei werden die Klemmfinger 86 manuell bewegt. Bei der in Fig. 7 dargestellten Ausbildung sind Zylinderstifte 88 zum Fixieren vorgesehen; auch könnte mittels Schrauben 94 eine manuelle Klemmung erfolgen. Bei anderen (nicht dargestellten Ausführungsformen kann der in dem Haltering 87 aufgenommene Bereich der Klemmfinger 86 jeweils einen Zahnstangenbereich aufweisen, der mit Zahnrädern (nicht dargestellt) kämmt, die über hervorstehende Zahnradwellen gemeinsam antreibbar sind. Bei einer anderen, ebenfalls hier nicht näher dargestellten Ausführungsform ist anstelle eines Zahnrades eine entsprechende Antriebsnocke vorgesehen.

Weiter können die Klemmfinger 86 mit hier nicht näher dargestellten Federelementen, z.B. je einer Druckfeder pro Klemmfinger 86, versehen sein, die für einen gleichmäßigen Anpressdruck der Klemmfinger 86 sorgen.

Wie am besten aus Fig. 8 ersichtlich, weist ein jeweiliges Stangenelement 90 des Klemmfingers 86, welches in dem Haltering 87 geführt ist, ein sich in Längsrichtung des Klemmfingers 86 erstreckendes Langloch 92 auf, durch welches eine Befestigungsschraube 94 geführt ist, wobei der Schaft der Befestigungsschraube 94 über den Anschlag in dem Langloch 92 die Verschiebebewegung der Klemmfinger 86 begrenzt.

An den nach innen gerichteten Enden weisen die Klemmfinger 86 ein Eingreifende in Form einer konisch zulaufenden Spitze 96 auf, die zum Eingreifen in die Aussparung 84 ausgebildet ist.

Weiter weist jeder Klemmfinger 86 an seinem freien Ende eine Stufe 98 auf, die an einer Seite durch die konisch zulaufende Spitze 96 begrenzt ist und an einer sich quer hierzu erstreckenden Seite durch das dicker ausgebildete Stangenelement 90 begrenzt ist.

Die von dem Gehäuse 18 abgewandt anzuordnende sich in Umfangsrichtung erstreckende Kante der Stufe 98, die an dem Stangenelement 90 ausgebildet ist, ist zum Bilden einer ersten Biegeform 100 abgerundet. Ebenfalls ist eine von dem Gehäuse 18 abgewandt anzuordnende sich in Radialrichtung erstreckende Kante an der Spitze 96 zum Bilden einer Biegeform 102, 104 für das Schränken ausgebildet. Dies gilt sowohl für die Kante im Bereich der Stufe 98 als auch die Kante auf der anderen Seite der Spitze 96, die so ebenfalls eine abgerundete Biegeform 104 für den Schränkprozess bildet.

Bei der in der Fig. 7 und 8 dargestellten Klemmposition sind die Spitzen 96 in die Spitzenaufnahmen 86 an dem Ringflansch 82 eingeführt; die Stufen 98 und die Spitzen 96 bilden mit den Spitzen 96 der benachbarten Klemmfinger 86 Aufnahmenuten 106 für eine Gruppe von Drahtenden 34, 34a-34d, die zusammen aus einer Gehäusenut 20 vorstehen. Diese Gruppe von Drahtenden 34a-34d wird zwischen einem ersten Klemmbereich 108 an der ersten Klemmeinrichtung 74 und einem zweiten Klemmbereich 110 an der zweiten Klemmeinrichtung 76 geklemmt, wenn die Klemmfinger 86 radial nach innen verfahren werden. Der erste Klemmbereich 108 ist an dem Ringflansch 82 jeweils zwischen den Spitzenaufnahmen 86 gebildet. Der zweite Klemmbereich 110 ist an dem von dem Stangenelement 90 begrenzten Bereich der Stufe 98 gebildet. Die Kanten, die von dem Gehäuse 18 abgewandt sind und rund um die jeweilige Aufnahmenut 106 ausgebildet sind, wirken so als Biegeform 100, 102, 104 für das Drahtumformen. Beim Drahtumformen sind die Klemmfinger 86 einerseits in dem Haltering 87 und andererseits durch die Aufnahme der Spitzen 96 in der Spitzenaufnahme 85 abgestützt.

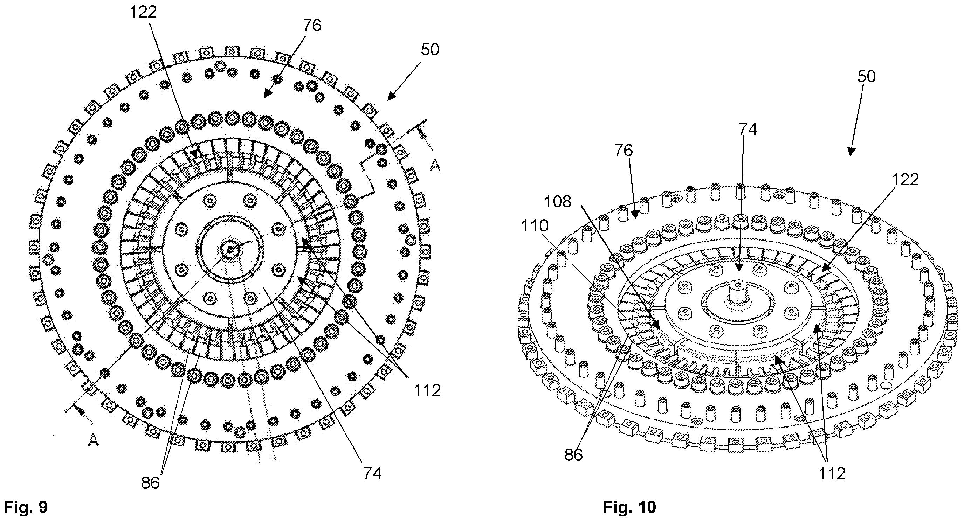

Im Folgenden wird noch anhand der Figuren 9-11 eine zweite Ausführungsform für die Klemmvorrichtung 50 näher erläutert. Diese zweite Ausführungsform entspricht bis auf die im Folgenden näher dargestellten Unterschiede der ersten Ausführungsform, so dass auf die obige Beschreibung verwiesen werden kann, wobei auch für entsprechende Elemente die gleichen Bezugszeichen verwendet worden sind.

Die zweite Ausführungsform ist insbesondere dort verwendbar, wo wenig Platz für das Einführen und Befestigen der ersten Klemmeinrichtung 74 vorhanden ist.

Hierzu ist anstelle des Ringscheibenkörpers 80 eine Anordnung von mehreren radial bewegbaren Segmenten 112 vorgesehen, die zwischen einem Grundkörper 114 und einer Ringscheibe 116 in radialer Richtung bewegbar geführt sind und über ein mittels eines Antriebsgewindes 118 axial bewegbares konusförmiges Antriebselement 120 antreibbar sind. Der in Fig. 2 dargestellte obere Rand des Gehäuses 18 mit den Drahtenden 34, 34a-d lässt sich in eine ringförmige Vertiefung 122 einführen, die zwischen den radial bewegbaren Segmenten 112 und dem Haltering 87 ausgebildet ist, wobei dann durch axiales Verschieben des konusförmigen Antriebselements 120 die radial bewegbaren Segmente 112 radial nach außen verfahren werden, um so gegen die Innenwandbereiche 78 des Gehäuses 18 gefahren zu werden, so dass die Klemmvorrichtung 50 so an diesen Innenwandbereichen 78 fixiert wird.

Bei beiden hier dargestellten Ausführungsformen der Klemmvorrichtungen 50 stehen dann die Drahtenden 34a-34d aus jeder Gehäusenut 20 über die Klemmvorrichtung 50 hervor, wie dies in Fig. 6 angedeutet ist, und können durch die jeweilige Biegevorrichtung 52, 54 umgeformt werden.

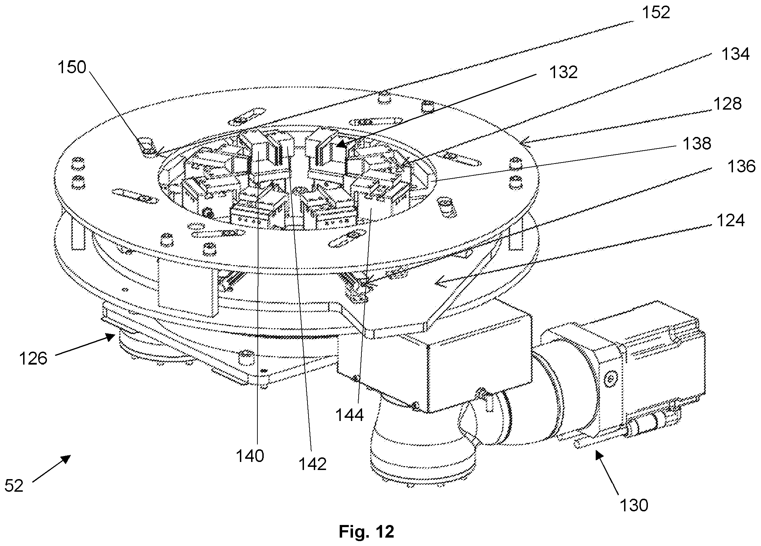

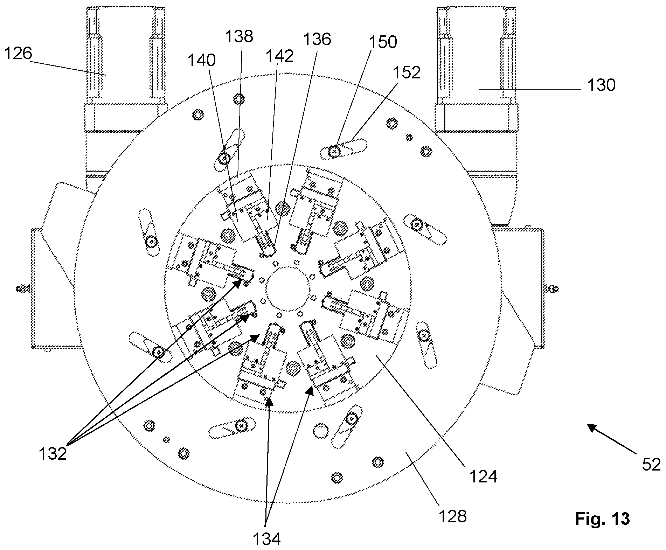

Ein Ausführungsbeispiel für die Radial-Biegevorrichtung 52 wird im Folgenden anhand der Darstellungen in den Figuren 12-14 näher erläutert.

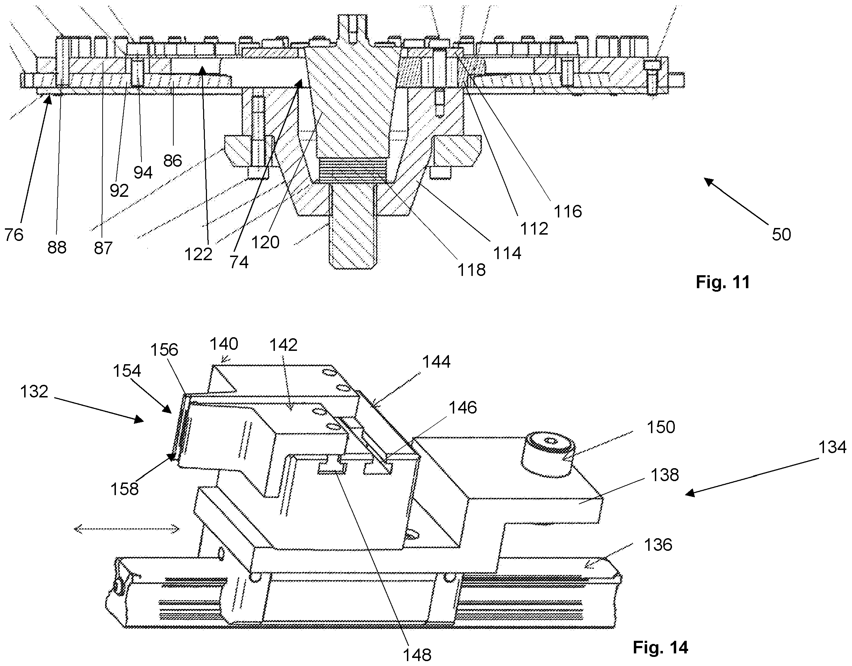

Die in den Figuren 12-14 dargestellte Ausführungsform der Radial-Biegevorrichtung 52 weist eine um eine Drehachse drehbare Grundplatte 124, eine durch die erste Steuerung 68 ansteuerbare Grundplattenantriebseinrichtung 126 zum Antreiben der Drehbewegung der Grundplatte 124, eine relativ zu der Grundplatte 124 ebenfalls um die Drehachse drehbare Antriebsplatte 128, eine Antriebsplattenantriebseinrichtung 130 zum Antreiben der Drehbewegung der Antriebsplatte 128, welche durch die erste Steuerung 68 ansteuerbar ist, sowie eine Reihe von über einen Umfang verteilt angeordnete Greifer 132 auf. Je ein Greifer 132 ist auf einer Greifereinheit 134 ausgebildet, die in Fig. 14 einzeln dargestellt ist.

Hierzu sind auf der Grundplatte 124 Verschiebeführungen beispielsweise in Form einer Verschiebeschiene 136 vorgesehen, die sich in radialer Richtung erstrecken. An der Verschiebeführung ist jeweils ein Greiferschlitten 138 verschiebbar geführt. Auf dem Greiferschlitten 138 sind eine erste Greifbacke 140 und eine zweite Greifbacke 142 relativ zueinander in tangentialer Richtung verschiebbar geführt. Beispielsweise ist auf dem Greiferschlitten 138 ein Führungsblock 144 mit einer ersten Führungsnut 146 zum Führen der Greifbacke 140 und einer zweiten Führungsnut 148 zum Führen der zweiten Greifbacke 142 ausgebildet. Weiter weist jede Greifereinheit 134 eine in den Zeichnungen nicht näher dargestellte Backenantriebseinheit auf. Die Backenantriebseinheiten aller Greifbacken können mittels einer ebenfalls nicht näher dargestellten gemeinsamen Antriebseinrichtung synchron antreibbar sein. Alternativ können die Backen aller, einer Gruppe oder einzelner Greifer 132 z. B. über Elektromotoren einzeln antreibbar sein. Die Backenantriebseinrichtung bzw. die Backenantriebseinheiten sind ebenfalls über die erste Steuerung 68 ansteuerbar.

Wie weiter aus Fig. 14 und den Fig. 12 und 13 entnehmbar, weist jeder Greiferschlitten 138 einen Kulissenstift 150 auf, der in eine entsprechende, pro Greifer 132 vorgesehene Kulisse 152 in der Antriebsplatte 128 eingreift. Bei dem dargestellten Ausführungsbeispiel ist die Kulisse 152 jeweils durch ein sich schräg zur Radialrichtung erstreckendes Langloch ausgebildet. Eine Relativdrehung zwischen Antriebsplatte 128 und Grundplatte 124 führt so über die als Langloch ausgebildete Kulisse 152 zu einer Verschiebung der Greiferschlitten 138 und somit der Greifer 132 entlang der Verschiebeschiene 136 in radialer Richtung. Hierdurch sind alle Greifer 132 gemeinsam in radialer Richtung bewegbar.

Wie am besten aus Fig. 14 ersichtlich, sind die einzelnen Greifer 132 pinzettenförmig ausgestaltet. Hierzu ist an jeder Greifbacke 140, 142 jeweils ein in radialer Richtung nach innen vorstehendes freies Ende 154 vorgesehen, wobei an der Spitze des freien Endes 154 ein auf die andere Greifbacke zu vorstehender Vorsprung 156 vorgesehen ist. Die zueinander gerichteten Flächen der Vorsprünge 156 bilden die Klemmflächen 158 zum Klemmen der jeweils zu verbiegenden Drahtenden 34a-34d. Hierzu ist die Dimension der Klemmflächen 158 derart gewählt, dass stets jeweils nur ein Drahtende 34a-34d zwischen den Vorsprüngen 156 eingeklemmt wird. Bei einigen Ausführungsformen können Klemmflächen zwischen zwei Vorsprüngen vorgesehen sein, so dass die Drahtenden an den Klemmflächen reibschlüssig und an zwischen den Vorsprüngen formschlüssig erfassbar sind

Wie aus Fig. 6 ersichtlich, steuert die erste Steuerung 68 außerdem auch die erste Relativbewegungsvorrichtung 56 an, dies ist jeweils diejenige Relativbewegungsvorrichtung, welche durch die Transportvorrichtung 60 in eine Position nahe der Radial-Biegevorrichtung 52 bewegt worden ist.

Derjenige Teilbereich des Drahtendenumformverfahrens, welcher zum Aufweiten der Drahtenden führt (das Verbiegen der Drahtenden 34a-34d aus der in Fig. 2 dargestellten Lage in die Fig. 3 dargestellte Lage) wird im Folgenden näher erläutert.

Zunächst wird das von der Hairpineinsteckvorrichtung 30 kommende Gehäuse 18 mit den aus den Gehäusenuten 20 hervorstehenden Drahtenden 34 an der Gehäusehalterung 64 fixiert, und die Klemmvorrichtung 50 wird derart an dem Gehäuse 18 fixiert, dass die Klemmvorrichtung 50 zwischen dem Gehäuse 18 und der Radial-Biegevorrichtung 52 angeordnet ist. Genauer ist die Klemmvorrichtung 50 an dem Ende des Gehäuses 18 angeordnet, wobei die Drahtenden 34a-34d, die gemeinsam aus einer Gehäusenute 20 herausragen, jeweils gemeinsam zwischen einem der Klemmfinger 86 und der ersten Klemmeinrichtung 74 verklemmt werden. Die entsprechende Aufnahmenut 106 der Klemmvorrichtung 50 ist dabei derart ausgebildet, dass die mit ihrem Ende herausstehende Nutisolierung 24 geschützt bleibt.

Dann wird das Gehäuse 18 mittels der ersten Relativbewegungsvorrichtung 56 mit den nach unten ragenden herausragenden Drahtenden 34a-34d axial in Richtung auf die Radial-Biegevorrichtung 52 verfahren.

Anfangs sind alle Greifer 132 durch entsprechende Relativstellung zwischen Grundplatte 124 und Antriebsplatte 128 in die am weitesten nach außen gefahrene Position verfahren. Die über die Klemmvorrichtung 50 weiter nach unten stehenden Drahtenden 34, 34a-34d werden in den Raum radial innerhalb der Greifer 132 eingefahren. Die Grundplatte 124 wird so positioniert, dass jeder Greifer 132 mittig zu einer Gehäusenut 20 ausgerichtet ist. Bei der dargestellten Ausführungsform sind weniger Greifer 132 als Gehäusenuten 20 vorgesehen. Beispielsweise sind 64 Gehäusenuten vorgesehen, jedoch nur 8 Greifer. Vorzugsweise gilt für die Anzahl n_{GN} der Gehäusenuten und die Anzahl n_{Gr} der Greifer 132: n_{GN} = M x n_{Gr}, wobei M, n_{GN} und n_{Gr} natürliche Zahlen sind.

Somit werden zunächst die Drahtenden 34a-34d, die aus einer Teilgruppe der Gehäusenuten 20 hervorstehen, radial aufgeweitet.

Hierzu steuert die erste Steuerung 68 die Antriebsplattenantriebseinrichtung 130 derart an, dass die Greifer 132 mit voneinander entfernten Greiferbacken 140, 142 auf die Höhe der radial am weitesten außen angeordneten ersten Drahtenden 34a verschoben werden. Anschließend wird die Backenantriebseinrichtung angesteuert, um die Greiferbacken 140, 142 zueinander zu bewegen und so die ersten Drahtenden 34a durch die Greifer 132 zu erfassen. Mit zusammengeführten Greifbacken 140 wird dann die Antriebsplattenantriebseinrichtung 130 durch die erste Steuerung 68 derart angetrieben, dass die Greifer 132 sich um einen vorbestimmten Betrag entlang der Verschiebeschiene 136 radial nach außen bewegen, um so die ersten Drahtenden 34a radial nach außen umzubiegen. Dabei bewirkt die erste abgerundete Biegeform 100 eine reproduzierbare Verbiegung der ersten Drahtenden 34a. Gleichzeitig wird die erste Relativbewegungsvorrichtung 56 angesteuert, um die Relativposition zwischen Gehäuse 18 und Radial-Biegevorrichtung 52 entsprechend der sich beim Verbiegen einstellbaren Änderung der Erstreckung der ersten Drahtenden 34 in axialer Richtung auszugleichen.

Anschließend werden die Greifbacken 140, 142 auseinander bewegt, und die Greifer 132 werden über Ansteuerung der Antriebsplattenantriebseinrichtung 130 auf die Radialposition der zweiten Drahtsegmente 48b bewegt, während die axiale Relativposition auf einen für das zweite Drahtende spezifischen Wert zum Beginn der Biegung der zweiten Drahtenden 34b eingestellt wird. Die zweiten Drahtenden 34b werden dann entsprechend durch zueinander Bewegen der Greifbacken 140 geklemmt und/oder formschlüssig gehalten und durch Bewegung der Greifer 132 radial nach außen um einen bestimmten, kleineren Betrag als die ersten Drahtenden 34a nach außen gebogen. Auch hierbei wird wiederum die axiale Relativposition entsprechend der Änderung der axialen Erstreckung der zweiten Drahtenden 34b nachgeführt.

Dieser Vorgang wird dann für das dritte Drahtende 34c wiederholt. Bei einer Ausführungsform bleibt das vierte Drahtende 34d in der ursprünglichen Stellung. Bei einer anderen Ausführungsform wird auch das vierte Drahtende 34d um einen kleinen Betrag nach außen gebogen, um auch eine Positionierung des vierten Drahtendes in einem engen Toleranzbereich sicher zu stellen. Grundsätzlich ist aber auch eine Biegung nach innen möglich, zumindest von einigen Drahtenden, beispielsweise der innersten Drahtenden 34d.

Anschließend fahren die Greifer 132 wieder in die radial äußerste Position und anschließend wird durch die erste Steuerung 68 die Grundplattenantriebseinrichtung 126 angetrieben, um die Grundplatte 124 ein Stück zu drehen, bis die Greifer 132 auf die Mitte der nächsten benachbarten Gehäusenut 20 eingestellt sind. Hier wiederholt sich dann der Vorgang des Aufweitens wieder beginnend mit dem ersten, radial äußersten Drahtende 34a bis zum dritten Drahtende 34c oder eventuell bis zum vierten Drahtende 34d.

Bei der hier dargestellten Ausführungsform, wo die Anzahl n_{Gr} der Greifer 132 ein Achtel der Anzahl n_{GN} der Gehäusenuten 20 ist, ist der Aufweitvorgang nach einer achtmaligen Verstellung der Grundplatte 124 beendet.

Bei anderen Ausführungsformen sind nicht vier Drahtenden 34a-34d pro Gehäusenut 20 vorgesehen, sondern eine abweichende Zahl. Auch bei diesen Ausführungsformen erfolgt das Aufweiten analog zu der anhand des Beispiels mit vier Drahtenden 34a-34d pro Gehäusenut 20 erläuterten Beispiel.

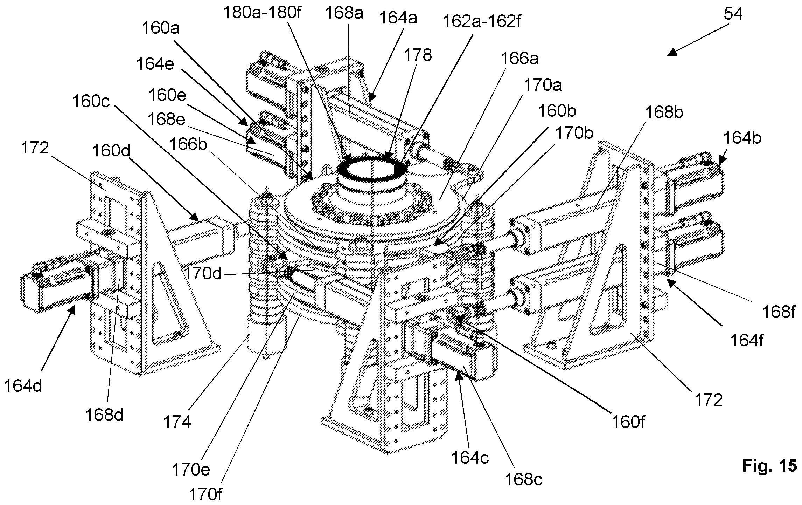

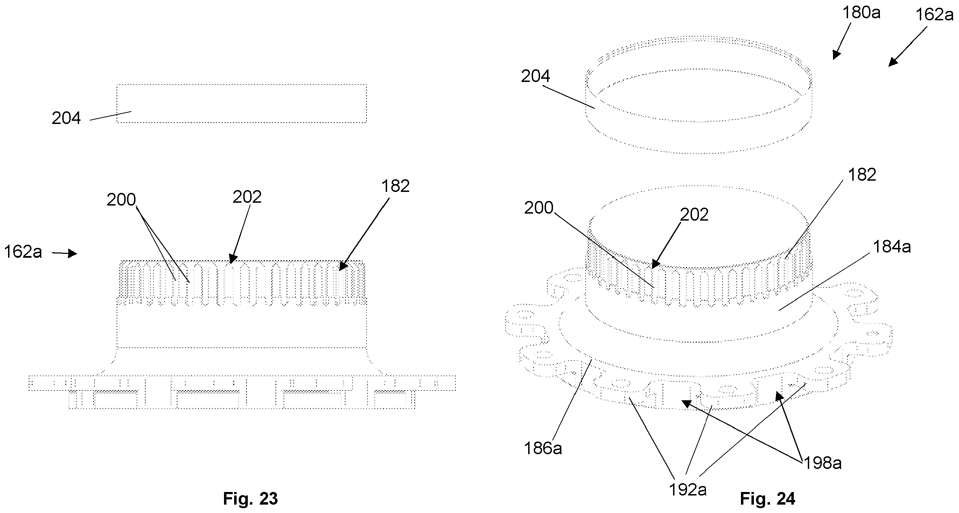

Im Folgenden werden anhand der Darstellungen in den Figuren 15-33 mögliche Ausführungsformen der Umfangs-Biegevorrichtung 54 näher erläutert.

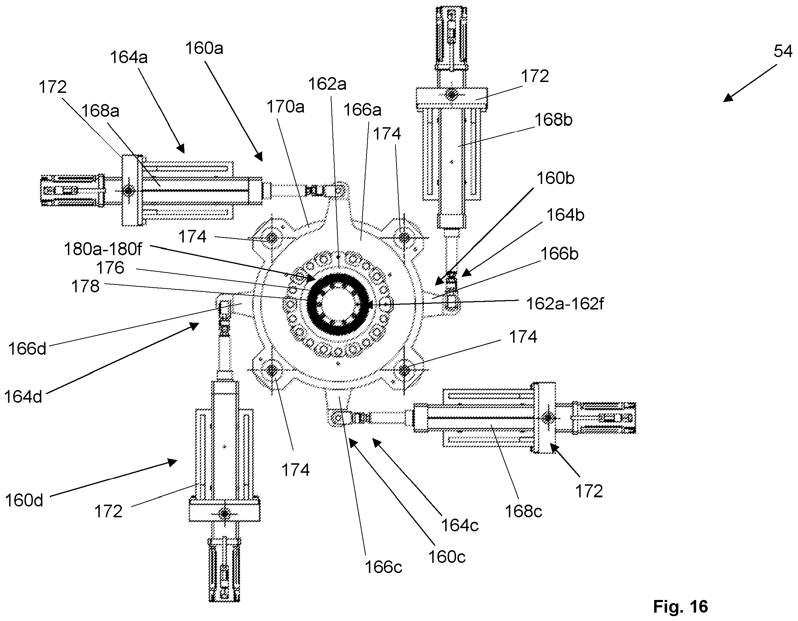

Dabei ist in den Figuren 15 und 16 eine Gesamtübersicht über eine Ausführungsform der Umfangs-Biegevorrichtung 54 dargestellt. Diese Ausführungsform weist eine erste bis sechste Aufnahme- und Dreheinrichtung 160a-160f auf. Jede Aufnahme- und Dreheinrichtung 160a-160f weist jeweils eine Aufnahme- und Dreheinheit 162a-162f zum Aufnehmen einer Gruppe von Drahtenden 34a oder 34b oder 34c oder 34d mit gleichem radialem Abstand zur Gehäusemitte und zum Verdrehen dieser Drahtenden 34a, 34b, 34c oder 34d zwecks Verbiegung in Umfangsrichtung und eine Antriebseinrichtung 164a-164f zum Antreiben einer Drehbewegung der Aufnahme- und Dreheinheit 162a-162f auf.

Jede Antriebseinrichtung 164a-164f weist ein um die gemeinsame Drehachse drehbar gelagertes ringförmiges Antriebselement 166a-166f und einen Aktor 168a-168f zum Drehantrieb des Antriebselements 166a-166f auf. In dem dargestellten Ausführungsbeispiel sind die Antriebselemente 166a-166f als Ringscheibenelemente mit einem Ausleger ausgebildet, wobei die Aktoren 168a-168f als Linearantriebe, beispielsweise als elektrische Spindelantriebe ausgebildet, gestaltet sind.

Weiter ist jedes Antriebselement 166a-166f auf einer stationär befestigten Ringtragscheibe 170a-170f drehgelagert. Die Aktoren 168a-168f sind an Maschinengestellen 172 stationär zu den Ringtragscheiben 170a-170f gelagert. Die Ringtragscheiben 170a-170f sind gemeinsam an Befestigungssäulen 174 befestigt. So sind die Antriebselemente 166a-166f sowie die daran in noch näher dargelegter Weise befestigten Aufnahme- und Dreheinheiten 162a-162f zwar um eine gemeinsame Drehachse auch relativ zueinander drehbar, werden jedoch in axialer Richtung stationär zueinander gehalten. Es ist lediglich ein Drehantrieb (erste bis sechste Antriebseinrichtung 164a-164f) jedoch kein gesonderter Axialantrieb notwendig.

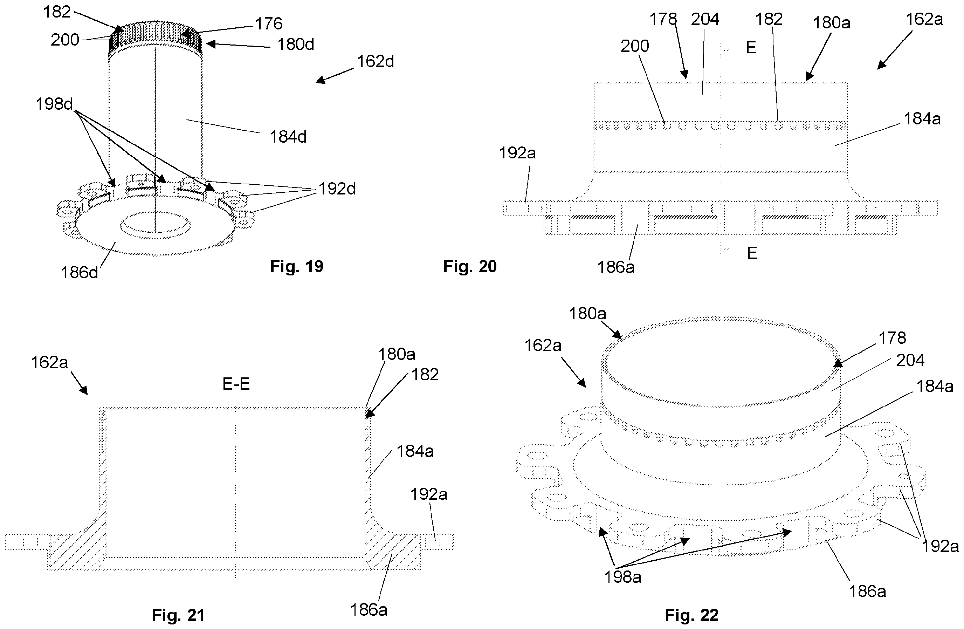

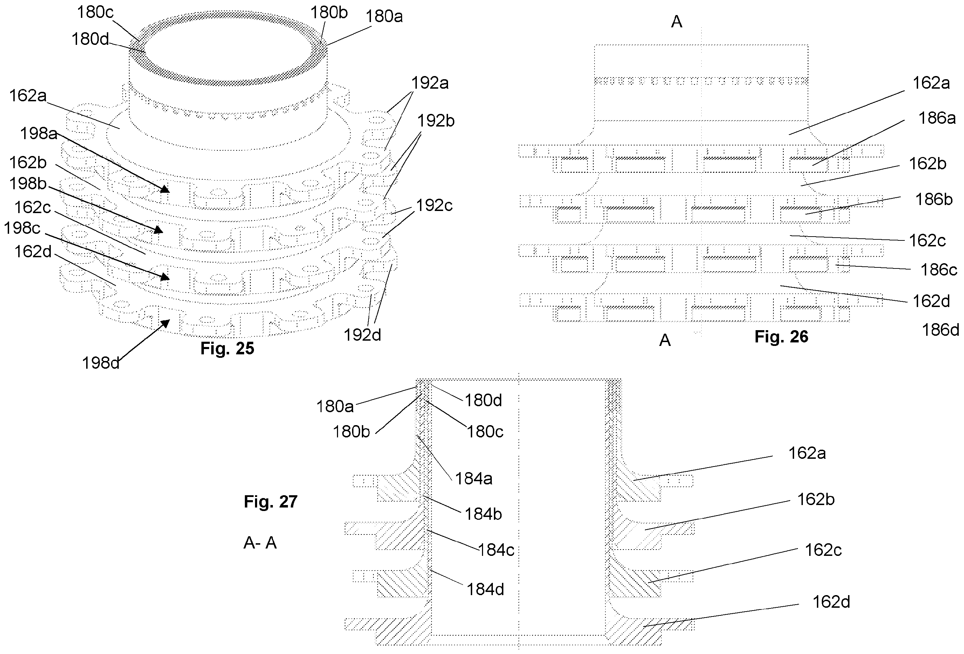

In den Figuren 20 bis 24 ist die erste Aufnahme- und Dreheinheit 162a in unterschiedlichen Darstellungen gezeigt. Fig. 19 zeigt eine perspektivische Darstellung der vierten Aufnahme- und Dreheinrichtung 162d und die Figuren 25 bis 27 zeigen eine Kombination der ineinander gestapelten ersten bis vierten Aufnahme- und Dreheinheit 162a-162d. Wie aus diesen Darstellungen ersichtlich, weist jede Aufnahme- und Dreheinheit 162a-162f eine ringförmige Anordnung von nach oben hin offenen und sich in axialer Richtung nach unten erstreckenden Aufnahmelöchern 176 zum Aufnehmen von Drahtenden auf. Die Ringanordnung von Aufnahmelöchern 176 wird an Schränkkronen 180a-180f ausgebildet, die umeinander liegend mit unterschiedlichem Durchmesser auf gleicher axialer Höhe angeordnet sind und alle nach oben hin auf der gleichen axialen Höhe enden. Dabei weist die erste Aufnahme- und Dreheinheit 162a eine Ringanordnung von Aufnahmelöchern 176 mit dem größten Durchmesser auf. Darin erfolgt nach innen gesehen die Ringanordnung der zweiten Aufnahme- und Dreheinheit 162b, dann die Ringanordnung der dritten Aufnahme- und Dreheinheit 162c usw. bis zur sechsten Aufnahme- und Dreheinheit 162f, deren Ringanordnung am weitesten innen angeordnet ist.

Somit ist die erste Aufnahme- und Dreheinheit 162a zum Aufnehmen der am weitesten radial außen angeordneten ersten Drahtenden 34a ausgebildet, wobei alle ersten Drahtenden 34a von allen Gehäusenuten 20 erfassbar und durch Drehung der ersten Aufnahme- und Dreheinheit 162a in Umfangsrichtung verbiegbar sind. Die zweite Aufnahme- und Dreheinheit 162b ist zur Aufnahme aller aus allen Gehäusenuten 20 hervorstehenden zweiten Drahtenden 34b ausgebildet. Zum Drahtenden Umformen wird die zweite Aufnahme- und Dreheinheit 162b in die entgegengesetzte Richtung wie die erste Aufnahme- und Dreheinheit 162a soweit verdreht, bis einige der ersten Drahtenden 34a aus einer der nächsten Gehäusenuten 20 auf der gleichen Umfangsposition wie einige der zweiten Drahtenden 34b zu liegen kommen, so dass Paare von miteinander zu verbindenden Drahtenden 34a, 34b nebeneinander zu liegen kommen. Die dritte Aufnahme- und Dreheinheit 162c dient zum Aufnehmen und Verbiegen der dritten Drahtenden 34c in Umfangsrichtung und die vierte Aufnahme- und Dreheinheit 162d dient zum Aufnehmen und Umbiegen der vierten Drahtenden 34d.

Die hier dargestellte Umfangs-Biegevorrichtung 54 weist noch eine fünfte und sechste Aufnahme- und Dreheinheit 162e und 162f auf, so dass auch noch fünfte und sechste Drahtenden umgebogen werden könnten. Zur Herstellung des Stators, von dem ein Vorprodukt in den Figuren 2 und 3 dargestellt ist, wo vier Drahtenden 34a-34d aus jeder Gehäusenute 20 hervorragen, reichen die erste bis vierte Aufnahme- und Dreheinrichtung 160a-160d aus, so dass die fünfte und sechste Aufnahme- und Dreheinrichtung 160e, 160f auch weggelassen werden könnten. Bei entsprechend geringerer oder größerer Anzahl von Drahtenden wäre die Anzahl von Aufnahme- und Dreheinrichtungen entsprechend anzupassen.

Das Umbiegen der Drahtenden 34a-34d in Umfangsrichtung erfolgt jeweils mit entgegengesetzter Drehrichtung für die in einer Gehäusenut 20 benachbart zueinander angeordneten Drahtenden 34a/34b, 34b/34c, 34c/34d und zwar so weit, dass mit einem benachbarten Drahtende aus einer der nächsten Gehäusenuten 20 jeweils ein Paar zur Verbindung so hergestellt werden kann, dass sich mehrere durchgängige Spulenwicklungen ergeben. Dabei müssen die jeweils äußeren Drahtenden 34a aufgrund des größeren Umfanges an der Außenseite um eine größere Strecke umgebogen werden als die jeweils ganz innen angeordneten Drahtenden 34d.

Daher werden die Hairpins 12 vorzugsweise bereits derart hergestellt und/oder in das Gehäuse 18 eingeschoben, dass die ersten Drahtenden 34a, wie dies in Fig. 2 und Fig. 3 dargestellt ist, mit einer größeren Länge vorstehen als die zweiten Drahtenden 34b, die zweiten Drahtenden 34b mit einer größeren Länge vorstehen als die dritten Drahtenden 34c und die dritten Drahtenden 34c wiederum mit einer größeren Länge vorstehen als die vierten Drahtenden 34d. Die Unterschiede in der Länge hängen jeweils von den Unterschieden der zu überbrückenden Strecke in Umfangsrichtung ab.

Beim Verbiegen der Drahtenden 34a-34d durch Drehung der entsprechenden Aufnahme- und Dreheinheit 162a-162d verkürzt sich aufgrund der Umbiegung die jeweilige axiale Erstreckung des sich immer weiter verbiegenden Drahtendes 34a-34d.

Deswegen wird beim Schränkprozess in der Umfangs-Drahtendenumformvorrichtung 38 die zweite Relativbewegungsvorrichtung 58 entsprechend nachgeführt, um den Längenausgleich auszugleichen. Die entsprechende Ansteuerung erfolgt über die zweite Steuerung 70, welche sowohl alle Antriebseinrichtungen 164a-164f und somit über die Aktoren 168a-168f die Antriebselemente 166a-166f ansteuert als auch die zweite Relativbewegungsvorrichtung 58 ansteuert.

Dabei ergeben sich für die unterschiedlich langen Drahtenden 34a-34d und die unterschiedlichen Strecken der Verbiegung in Umfangrichtung für die jeweiligen Drahtenden 34a-34d mit unterschiedlichen radialen Abstand zur Gehäusemittelachse unterschiedliche Bewegungsprofile K1, K2, K3, K4.

Anstelle nun für jede Aufnahme- und Dreheinrichtung 160a-160f für den unterschiedlichen Längenausgleich eine gesonderte Bewegung in Axialrichtung vorzusehen, wird die Drehbewegung der einzelnen Aufnahme- und Dreheinheiten 162a-162f unterschiedlich derart gesteuert, dass in Abhängigkeit von der Relativbewegung zwischen Gehäuse 18 und Umfangs-Biegevorrichtung 54 und in Abhängigkeit von der sich durch die Verbiegung der jeweiligen Drahtenden 34a-34d in Umfangsrichtung sich ergebende axiale Längenänderung die Drehbewegung jeder Aufnahme- und Dreheinheit 162a-162f individuell so angesteuert wird, dass sich in den Aufnahmelöchern 176 keine Relativbewegung zwischen dem jeweiligen Endbereich des Drahtendes 34a-34d und dem Aufnahmeloch 176 ergibt.

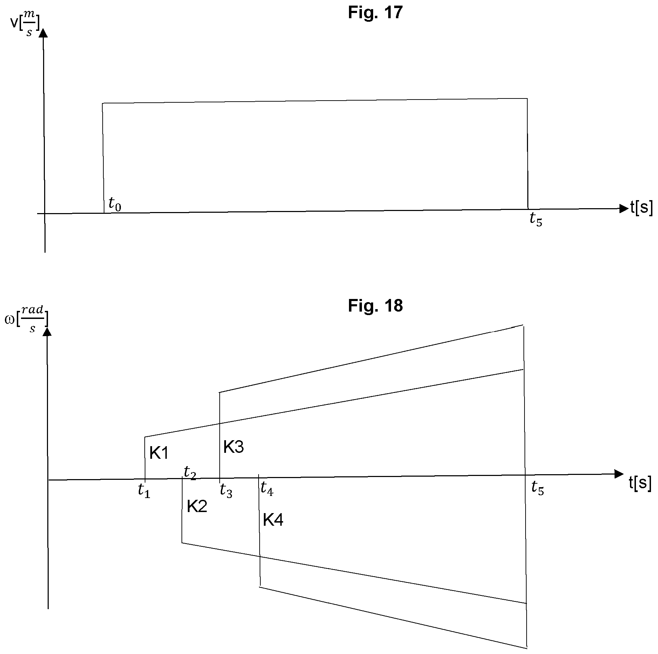

Stark vereinfachte Beispiele für entsprechende Bewegungsprofile K1-K4 sind in den Figuren 17 und 18 dargestellt. Fig. 17 zeigt hierbei das Bewegungsprofil der zweiten Relativbewegungsvorrichtung 58 und zwar genauer die Relativgeschwindigkeit v zwischen dem Gehäuse 18 und der Umfangs-Biegevorrichtung 54. Fig. 18 zeigt zur gleichen Zeit die Drehgeschwindigkeiten ω für die erste bis vierte Ausnahme- und Dreheinheit 162a-162d.

Wie aus Fig. 17 ersichtlich wird hierbei vorzugsweise das Gehäuse 18 mit einer gleichförmigen Geschwindigkeit v auf die Umfangs-Biegevorrichtung 54 zu bewegt.

Die ersten Drahtenden 34a befinden sich nach dem zuvor erläuterten Aufweitprozess auf der radialen Höhe der Ringanordnung

Aufnahmelöchern 176 der ersten Aufnahme- und Dreheinheit 162a und werden kurz vor dem Zeitpunkt t₁ mit ihren Endbereichen ein Stück in die Aufnahmelöcher 176 eingefahren. Der Zeitpunkt t₁ wird dabei so gewählt, dass ein genügend langer Endbereich der ersten Drahtenden 34a in die Aufnahmelöcher 176 der ersten Aufnahme- und Dreheinheit 162a eingefahren ist. Anschließend erfolgt, wie dies in der Kurve K₁ dargestellt ist, der Beginn einer Drehbewegung der ersten Aufnahme- und Dreheinheit 162a in der ersten Drehrichtung (positive Achse von Fig. 18). Die Drehgeschwindigkeit ω ist dabei nicht gleich, sondern verändert sich entsprechend der sich aus der gleichmäßigen Geschwindigkeit des Gehäuses 18 auf die Umfangs-Biegevorrichtung 54 zu und aus der sich durch die beim Drehen ergebenden axialen Längenänderung der ersten Drahtenden 34a ergebenden Anforderung. Die Kurve K₁ ist hierbei vereinfacht linear ansteigend angegeben. Der tatsächliche Bewegungsablauf ist etwas komplizierter, lässt sich aber leicht durch einfache Versuche oder rechnerisch ermitteln. Zielkriterium ist hierbei, dass sich die Endbereiche in axialer Richtung nicht innerhalb der Aufnahmelöcher verlagern.

Kurz vor dem Zeitpunkt t₂ fahren die Endbereiche der zweiten Drahtenden 34b in die Aufnahmelöcher 176 der zweiten Aufnahme- und Dreheinheit 162b ein, bis sie beim Zeitpunkt t₂ genügend weit darin eingefahren sind. Zu diesem Zeitpunkt t₂ beginnt die Drehung der zweiten Aufnahme- und Dreheinheit 162b in der entgegengesetzten Drehrichtung zu der Drehung der ersten Aufnahme- und Dreheinheit 162a (negativer Bereich bei Fig. 18). Die entsprechende Drehung der zweiten Aufnahme- und Dreheinheit 162b ist durch die Kurve K₂ ebenfalls vereinfacht als linear ansteigend angedeutet. Auch hier ist der eigentliche Bewegungsablauf komplizierter. Die Kurven K₃ und K₄ zeigen mit ihren Startpunkten t₃ und t₄ das jeweilige entsprechende Bewegungsprofil für die dritte Aufnahme- und Dreheinheit 162c bzw. die vierte Aufnahme- und Dreheinheit 162d. Wird hier ein Stator mit sechs Drahtenden pro Gehäusenut 20 verarbeitet, würden noch entsprechende Kurven für die fünfte und sechste Aufnahme- und Dreheinheit 162e, 162f angegeben.

Aus Fig. 17 und 18 ist ersichtlich, dass die unterschiedlichen Aufnahme- und Dreheinheiten 162a-162f mit unterschiedlichen Bewegungsprofilen angetrieben werden, um mit einfachem maschinellem Aufbau ohne gesonderte Axialantriebe den Längenausgleich beim Umformen der Drahtenden 34a-34d in Umfangsrichtung derart zu bewerkstelligen, dass möglichst keine Relativbewegung der Endbereiche der Drahtenden 34a-34d in den jeweiligen durch die Aufnahmelöcher 176 gebildeten Drahtendenaufnahme 182 erfolgt.

Bei dem zuvor erläuterten Umbiegen der Drahtenden 34a-34d in Umfangsrichtung mittels der Umfangs-Biegevorrichtung 54 ist die Klemmvorrichtung 50 weiterhin zwischen dem Gehäuse 18 und der Biegevorrichtung 54 angeordnet. Die zweite abgerundete Biegeform 102 an den Klemmfingern 86 wirkt dabei als Biegeform für die in die eine Drehrichtung umzubiegenden Drahtenden 34a, 34c und die dritte abgerundete Biegeform 104 an den Klemmfingern 86 wirkt dabei als Biegeform für die in die andere Drehrichtung umzuformenden Drahtenden 34b, 34d. Aufgrund der Klemmvorrichtung 50 wird auch beim Umformen der Drahtenden 34a-34d in Umfangsrichtung die Position der Drahtenden 34a-34d definiert beibehalten. Das Umformen erfolgt in höchst reproduzierbarer Weise. Außerdem werden die Nutisolationen 24 geschützt.

Nach der Fertigstellung des Drahtendenumformvorganges (Schränken) wird die Klemmvorrichtung 50 wieder entfernt, wozu zunächst die Klemmfinger 84 radial nach außen bewegt werden und so aus den Zwischenräumen zwischen den Drahtenden 34a-34d herausgefahren werden; anschließend kann die Klemmvorrichtung 50 von dem Gehäuse 18 gelöst werden und in axialer Richtung von dem Gehäuse 18 entfernt werden.

Das Gehäuse 18 mit den umgeformten Drahtenden 34a-34d wird dann zur nächsten Station in der Bauteilherstellvorrichtung 10 weiter transportiert, beispielsweise zu einer Vorspann- und/oder Fixiervorrichtung 40, wo die Paare von Drahtenden zum Durchführen von Schneid- und Schweißvorgängen eingefangen und/oder miteinander verspannt werden.

Wie zuvor erläutert, werden zum Umformen der Drahtenden 34a-34d die Endbereiche derselben axial in eine Ringanordnung von Aufnahmelöchern 176 eingeschoben und dann durch Verdrehung der Ringanordnung verschränkt.

Die Aufnahmelöcher 176 sind vorzugsweise an sogenannten Schränkkronen 180a-180f ausgebildet, die entsprechend bei einer automatisierten Serienproduktion von Statoren hochbelastet sind und daher von Zeit zu Zeit gewartet und/oder ausgetauscht werden sollten.

Im Folgenden wird anhand der Darstellungen in den Figuren 19 bis 33 die besondere Ausgestaltung von bevorzugten Ausführungsbeispielen für die Umfangs-Biegevorrichtung 54 erläutert, die einen leichten Austausch bzw. eine leichte Montage und Demontage der Aufnahme- und Dreheinheiten 162a-162f ermöglichen.

Fig. 19 zeigt ein Beispiel für die vierte Aufnahme- und Dreheinheit 162d und die Figuren 20 bis 24 zeigen ein Beispiel für die erste Aufnahme- und Dreheinheit 162a. Wie aus den Figuren 19 bis 24 ersichtlich, weisen die Aufnahme- und Dreheinheiten 162a-162f die Schränkkronen 180a-180f auf, an der die Ringanordnung von Aufnahmelöchern 176 ausgebildet sind, welche als Drahtendenaufnahmen 182 wirken. Die Schränkkronen 180a-180f sind an einem Ende eines zylindermantelförmigen Bereichs 184a-184f vorgesehen, an dessen anderen Ende ein Ringscheibenflansch 186a-186f ausgebildet ist, mittels dem die Aufnahme- und Dreheinheit 162a über eine lösbare Verbindung 188a-188f mit dem jeweiligen, als Antriebsring ausgebildeten Antriebselement 166a-166f verbunden ist.

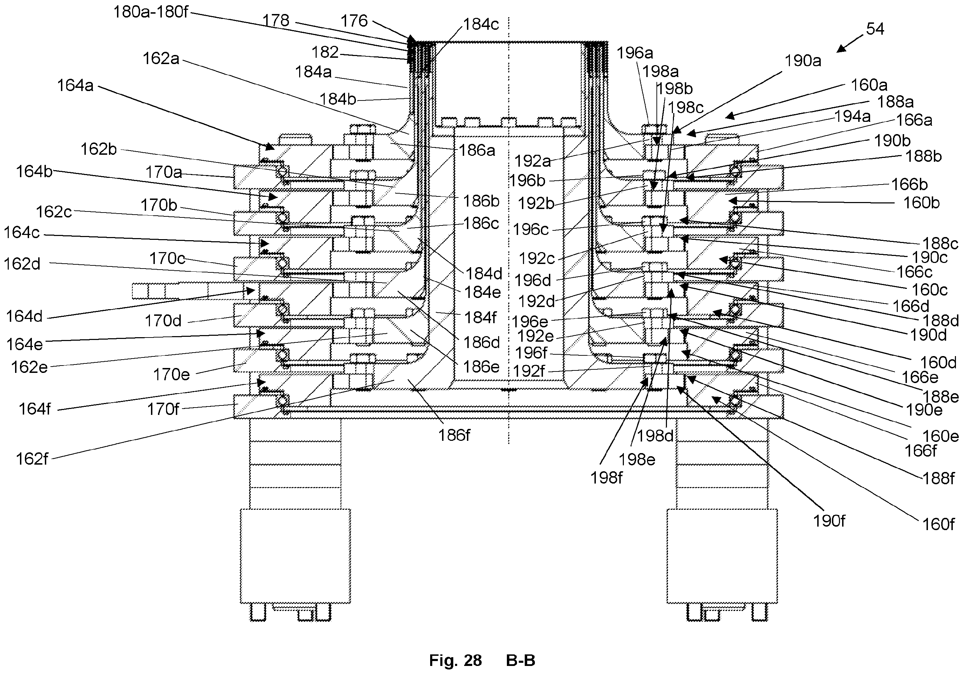

In den Figuren 25 bis 27 ist eine Kombination der ineinander geschachtelten ersten bis vierten Aufnahme- und Dreheinheit 162a-162d dargestellt, während die Figuren 28-33 eine Kombination der ersten bis sechsten Aufnahme- und Dreheinrichtung 160a-160f in unterschiedlichen Positionen zeigen.

Dabei sind das erste bis sechste Antriebselement 166a-166f übereinander angeordnet, wobei das erste Antriebselement 166a ganz oben angeordnet ist und das sechste Antriebselement 166f ganz unten angeordnet ist und die verbleibenden Antriebselemente 166b-166e dazwischen verteilt liegen. Entsprechend haben die zylindermantelförmigen Bereiche 184a-184f unterschiedliche Erstreckungen in axialer Richtung, wobei der erste zylindermantelförmige Bereich 184a derjenige Bereich mit der kürzesten axialen Erstreckung und der sechste zylindermantelförmige Bereich 184f derjenige mit der längsten axialen Erstreckung ist. Der sechste zylindermantelförmige Bereich hat den geringsten Außenumfang, der gerade so bemessen ist, dass er in den Innenumfang des fünften zylindermantelförmigen Bereichs 184e passt. Darum ist der vierte zylindermantelförmige Bereich 184d angeordnet; ganz außen ist der erste zylindermantelförmige Bereich 184a angeordnet; die verbleibenden zylindermantelförmigen Bereiche 184c sind dazwischen angeordnet.

Wie am besten aus den Figuren 28 bis 33 ersichtlich, weist jede der ersten bis sechsten lösbaren Verbindungen 188a-188f eine Reihe von über den Umfang verteilt angeordneten Verbindungsbrücken 190a-190f auf. Jede Verbindungsbrücke 190a-190f erstreckt sich radial und weist jeweils ein abtriebsseitiges Brückenelement 192a-192f an der Aufnahme- und Dreheinheit 162a-162f, ein antriebsseitiges Brückenelement 194a-194f an dem Antriebselement 166a-166f und ein Verbindungselement 196a-196f zum lösbaren Verbinden der Brückenelemente 192a-f, 194a-f auf.

Wie am besten aus den Figuren 19 bis 24 ersichtlich, sind die abtriebsseitigen Brückenelemente 192a-192f als über den Umfang des Ringflansches 186a-186f verteilte, sich radial erstreckende Vorsprünge in Form von Anschraubflanschen mit Bohrungen ausgebildet, die sich in axialer Richtung über eine Hälfte der axialen des Ringflansches 186a-186f erstrecken.

Die antriebsseitigen Elemente 194a-194f sind als an dem Innenumfang der ringförmigen Antriebselemente 196a-196f nach innen vorspringende Vorsprünge in Form von Anschraubflanschen mit Gewindebohrungen ausgebildet, deren axiale Höhe der zweiten Hälfte der axialen Erstreckung des Ringflansches 186a-186f entspricht. Die Verbindungselemente 196a-196f sind überwiegend durch Gewindeschrauben gebildet, die mit ihrem Gewindeschaft in die Gewindebohrungen der antriebsseitigen Brückenelemente 194a-194f einschraubbar sind, wobei deren Schraubköpfe an den Berandungen der Bohrungen der abtriebsseitigen Brückenelemente 192a anliegen und von oben mittels eines Werkzeugeingriffes erfassbar sind. Eines der Verbindungselemente, z. B. das im Bereich eines Auslegers, ist andersartig gestaltet, zum Beispiel durch einen Vorsprung an einem der Brückenelemente 192a-f, 194a-f und einem komplementären Rücksprung an dem anderen der Brückenelemente, um so eine vorbestimmte Relativposition sicher zu stellen.

Wie ein Vergleich der Figuren 19 bis 24 und die Darstellungen in den Figuren 25 bis 27 zeigen, bilden die über den Umfang des Ringflansches 196a-196f verteilten abtriebsseitigen Brückenelemente 192a-192f eine Zahnstruktur, deren Zahnteilung an der ersten bis sechsten Aufnahme- und Dreheinheit 162a-162f gleich ist. Zwischen den Verbindungsbrücken 190a-190f sind Durchlässe 198a-198f ausgebildet, deren lichte Weite in Umfangsrichtung größer bemessen ist als die maximale Erstreckung der Brückenelemente 192a-f, 194a-f in Umfangsrichtung. So können die Brückenelemente 192a-192f, 194a-f bei entsprechend relativ zueinander verdrehter Aufnahme- und Dreheinheit 162a-f einerseits und Antriebselement 166a-166f andererseits in axialer Richtung aneinander vorbei geführt werden.

Wie aus den Figuren 19 bis 24 ersichtlich, sind die Schränkkronen 180a-180f jeweils dadurch gebildet, dass am Ende des zylindermantelförmigen Bereichs 184a-184f sich axial erstreckende Längsnuten 200 eingefräst sind, wobei diese Längsnuten 200 an ihren freien Enden Einführschrägen 202 aufweisen. Die Anzahl der Längsnuten 200 entspricht der Anzahl n_{GN} der Gehäusenuten 20. Auf dieser Anordnung von über den Umfang verteilten Längsnuten 200 wird ein Schränkkronenring 204 geschoben, so dass die Aufnahmelöcher 176 an drei Seiten durch die Längsnuten-Ränder und an der radial äußeren Seite durch den Schränkkronenring 204 begrenzt sind.

Zum Austausch dieser Schränkkronen 180a-180f wird ein Demontage- und Montageverfahren durchgeführt, welches im Folgenden anhand den Darstellungen in den Figuren 28 bis 33 näher erläutert wird.

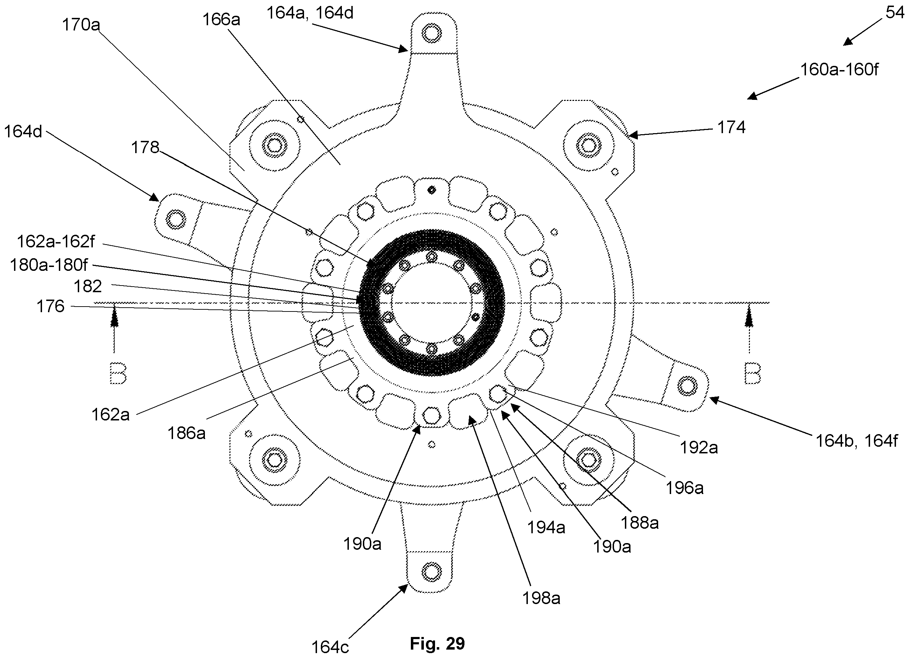

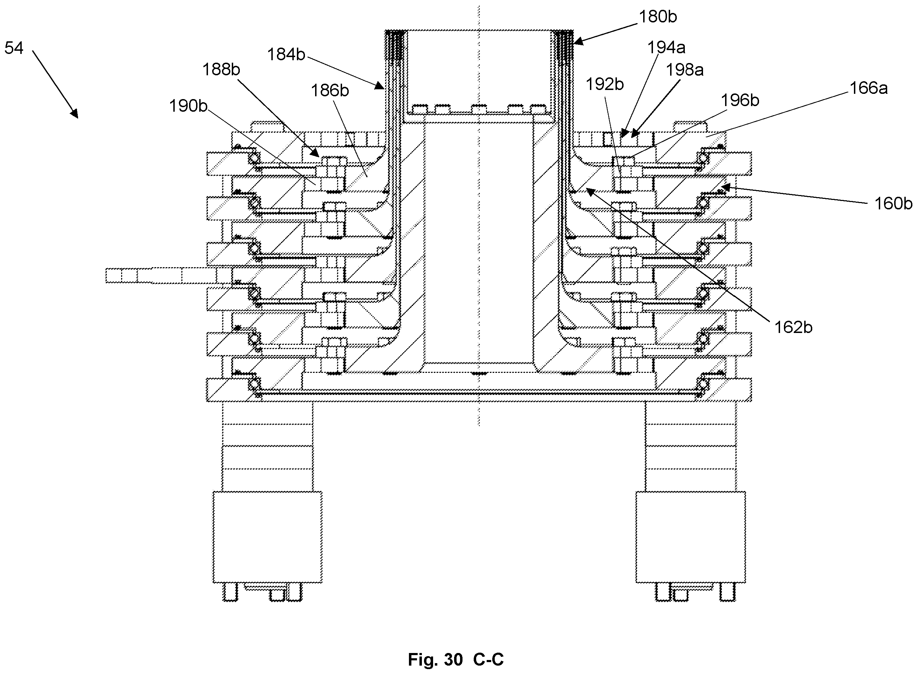

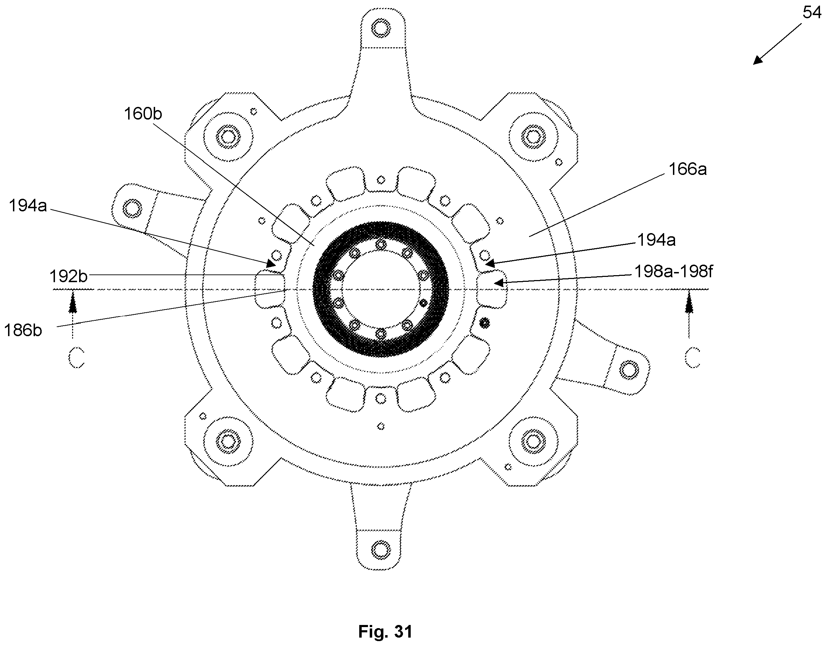

Die Figuren 28 und 29 zeigen dabei eine Ausgangstellung und Betriebsstellung der Umfangs-Biegevorrichtung 54. Hier werden zunächst die ersten Verbindungselemente 196a gelöst. Dies kann einfach durch Werkzeugangriff an den Schraubenköpfen geschehen. Anschließend kann die erste Aufnahme- und Dreheinheit 162a nach oben hin entfernt werden, was zu der in Figuren 30 und 31 dargestellten Situation führt. Wie aus Fig. 31 ersichtlich sind hierbei alle Brückenelemente 192a-192f, 194a-194f zueinander ausgerichtet.

Die zweite Steuerung 70 enthält einen Demontagemodus bzw. Montagemodus, mit der die einzelnen Antriebselemente 166a-166f einzeln zum Verfahren in eine jeweilige Demontagestellung verfahrbar sind.

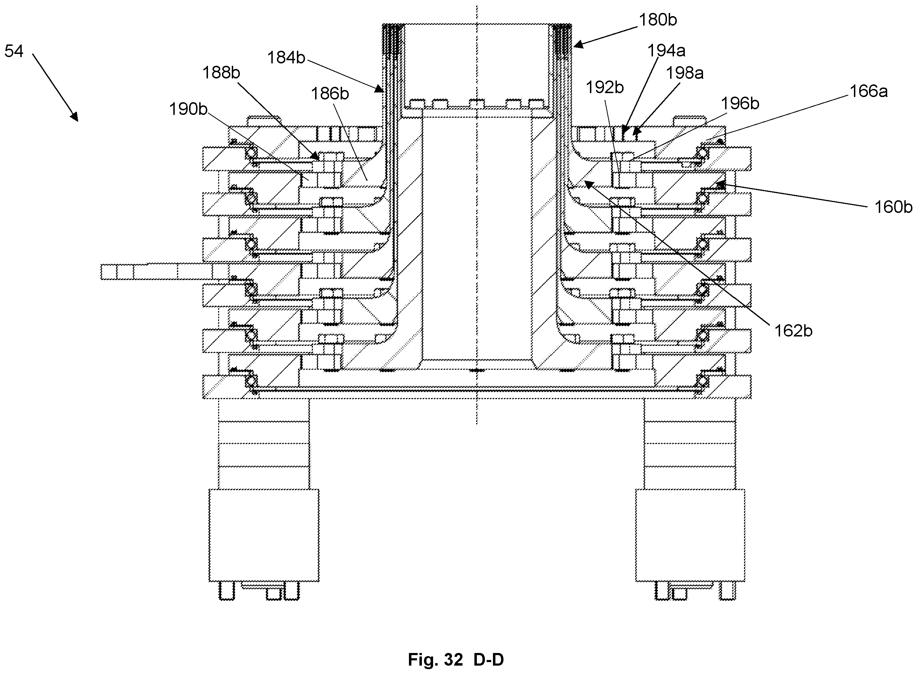

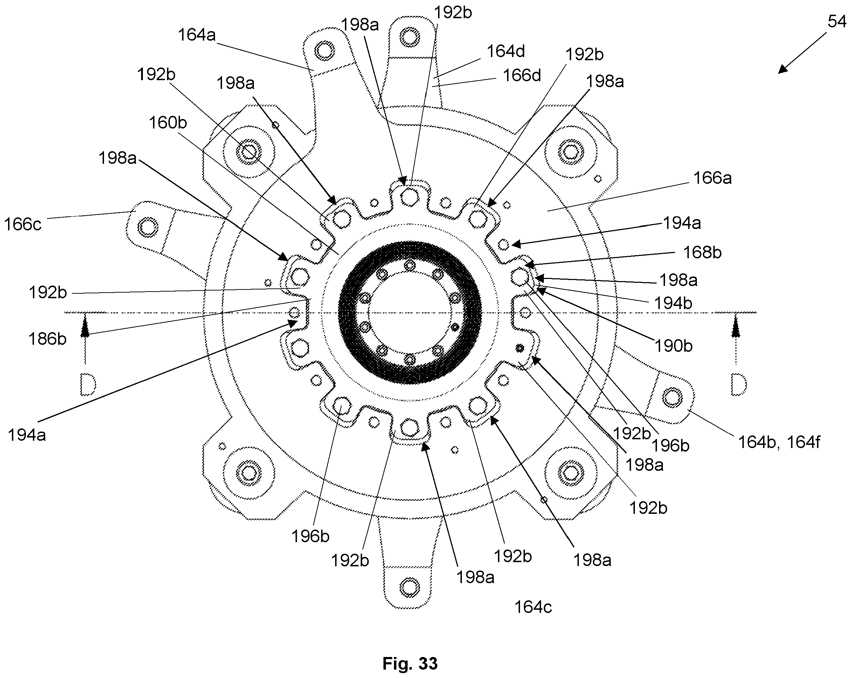

Dies ist in den Figuren 32 und 33 für das erste Antriebselement 166a dargestellt. Dieses erste Antriebselement 166a wird in der Demontagestellung so relativ zu dem zweiten Antriebselement 166b und der daran noch befestigten zweiten Aufnahme- und Dreheinheit 162b verdreht, dass die zweiten Verbindungsbrücken 190b mit den ersten Durchlässe 198a fluchten; vorzugsweise sind die Mitten der zweiten Verbindungsbrücken 190b mit den Mitten der ersten Durchlässe 198a ausgerichtet. In dieser Stellung sind die Schraubenköpfe der zweiten Verbindungselemente 196b durch die ersten Durchlässe 198a hindurch zugängig, so dass die zweiten Verbindungselemente 196b entfernbar sind.

Nach dem Entfernen der zweiten Verbindungselemente 196b kann die zweite Aufnahme- und Dreheinrichtung 160b durch Verlagerung in axialer Richtung nach oben hin entfernt werden, wobei die zweiten abtriebsseitigen Brückenelemente 192b durch die ersten Durchlässe 198a zwischen den ersten antriebsseitigen Brückenelementen 194a des ersten Antriebselements 160a geführt werden können. Anschließend wird auch das zweite Antriebselement 166b in die Demontagestellung verfahren, wobei die ersten und die zweiten antriebsseitigen Brückenelemente 194a, 194b miteinander fluchten und durch den ersten und zweiten Durchlass 198a, 198b hindurch die dritten Verbindungselemente 196c zugänglich sind. Nach Entfernen der dritten Verbindungselemente kann die dritte Aufnahme- und Dreheinheit 162c nach oben hinweg in axialer Richtung entnommen werden, wobei die dritten abtriebsseitigen Brückenelemente 192c durch die entsprechenden ersten und zweiten Durchlässe 198a, 198b zwischen den entsprechenden antriebsseitigen Brückenelementen 194a, 194b des ersten und zweiten Antriebselements 166a, 166b hindurch geführt werden. Dieser Vorgang lässt sich zur Entnahme der weiteren Aufnahme- und Dreheinrichtungen 160d-160f wiederholen.

Die Montage der neuen Aufnahme- und Dreheinrichtungen 160f-160a erfolgt dann entsprechend in umgekehrter Reihenfolge, wobei mit der sechsten Aufnahme- und Dreheinrichtung 160f begonnen wird, während das erste bis fünfte Antriebselement 166a-e in der Demontagestellung sind.

### Bezugszeichenliste:

- 10: Bauteilherstellvorrichtung
- 12: Hairpin
- 14: Drahtendenumformvorrichtung
- 16: Gehäuseherstellvorrichtung
- 18: Gehäuse
- 20: Gehäusenut
- 22: Vorrichtung zum Herstellen von Nutisolierungen
- 24: Nutisolierung
- 26: Hairpinherstellvorrichtung
- 28: Vorpositionierungsvorrichtung
- 30: Hairpineinsteckvorrichtung
- 32: Wicklungskopf
- 34: Drahtende
- 34a: erstes Drahtende
- 34b: zweites Drahtende
- 34c: drittes Drahtende
- 34d: viertes Drahtende
- 36: Radial-Drahtendenumformvorrichtung
- 38: Umfangs-Drahtendenumformvorrichtung
- 40: Vorspann- und/oder Fixiervorrichtung
- 42: Drahtendenschneidvorrichtung
- 44: Drahtendenschweißvorrichtung
- 46: Vorrichtungen zum elektrischen Kontaktieren und/oder Testen und/oder Vergießen, ....
- 48a: erstes Drahtsegment
- 48b: zweites Drahtsegment
- 48c: drittes Drahtsegment
- 48d: viertes Drahtsegment
- 50: Klemmvorrichtung
- 52: Radial-Biegevorrichtung
- 54: Umfangs-Biegevorrichtung
- 56: erste Relativbewegungsvorrichtung
- 58: zweite Relativbewegungsvorrichtung
- 60: Transportvorrichtung
- 62: Steuerungsvorrichtung
- 64: Gehäusehalterung
- 66: Gehäusehalterungsantrieb
- 68: erste Steuerung
- 70: zweite Steuerung
- 72: dritte Steuerung
- 74: erste Klemmeinrichtung (innere Klemmeinrichtung)
- 76: zweite Klemmeinrichtung (äußere Klemmeinrichtung)
- 78: Innenwandbereich
- 80: Ringscheibenkörper
- 82: Ringflansch
- 84: Aussparung
- 85: Spitzenaufnahme
- 86: Klemmfinger
- 87: Haltering
- 88: Zahnradwelle
- 90: Stangenelement
- 92: Langloch
- 94: Befestigungsschraube
- 96: Spitze
- 98: Stufe
- 100: erste abgerundete Biegeform (Weiten)
- 102: zweite abgerundete Biegeform (Schränken)
- 104: dritte abgerundete Biegeform (Schränken)
- 106: Aufnahmenut der Klemmvorrichtung
- 108: erster Klemmbereich
- 110: zweiter Klemmbereich
- 112: radial bewegbares Segment
- 114: Grundkörper der Klemmvorrichtung
- 116: Ringscheibe
- 118: Antriebsgewinde
- 120: konusförmiges Antriebselement
- 122: ringförmige Vertiefung
- 124: Grundplatte
- 126: Grundplattenantriebseinrichtung
- 128: Antriebsplatte
- 130: Antriebsplattenantriebseinrichtung
- 132: Greifer
- 134: Greifereinheit
- 136: Verschiebeschiene
- 138: Greiferschlitten
- 140: erste Greifbacke
- 142: zweite Greifbacke
- 144: Führungsblock
- 146: erste Führungsnut
- 148: zweite Führungsnut
- 150: Kulissenstift
- 152: Kulisse
- 154: freies Ende einer Greifbacke
- 156: Vorsprung am freien Ende der Greifbacke
- 158: Klemmfläche
- 160a: erste Aufnahme- und Dreheinrichtung
- 160b: zweite Aufnahme- und Dreheinrichtung
- 160c: dritte Aufnahme- und Dreheinrichtung
- 160d: vierte Aufnahme- und Dreheinrichtung
- 160e: fünfte Aufnahme- und Dreheinrichtung
- 160f: sechste Aufnahme- und Dreheinrichtung
- 162a: erste Aufnahme- und Dreheinheit
- 162b: zweite Aufnahme- und Dreheinheit
- 162c: dritte Aufnahme- und Dreheinheit
- 162d: vierte Aufnahme- und Dreheinheit
- 162e: fünfte Aufnahme- und Dreheinheit
- 162f: sechste Aufnahme- und Dreheinheit
- 164a: erste Antriebseinrichtung
- 164b: zweite Antriebseinrichtung
- 164c: dritte Antriebseinrichtung
- 164d: vierte Antriebseinrichtung
- 164e: fünfte Antriebseinrichtung
- 164f: sechste Antriebseinrichtung
- 166a: erstes Antriebselement
- 166b: zweites Antriebselement
- 166c: drittes Antriebselement
- 166d: viertes Antriebselement
- 166e: fünftes Antriebselement
- 166f: sechstes Antriebselement
- 168a: erster Aktor
- 168b: zweiter Aktor
- 168c: dritter Aktor
- 168d: vierter Aktor
- 168e: fünfter Aktor
- 168f: sechster Aktor
- 170a: erste Ringtragscheibe
- 170b: zweite Ringtragscheibe
- 170c: dritte Ringtragscheibe
- 170d: vierte Ringtragscheibe
- 170e: fünfte Ringtragscheibe
- 170f: sechste Ringtragscheibe
- 172: Maschinengestell
- 174: Befestigungssäule
- 176: Aufnahmelöcher
- 180a: erste Schränkkrone
- 180b: zweite Schränkkrone
- 180c: dritte Schränkkrone
- 180d: vierte Schränkkrone
- 180e: fünfte Schränkkrone
- 180f: sechste Schränkkrone
- 182: Drahtendenaufnahme
- 184a: erster zylindermantelförmiger Bereich
- 184b: zweiter zylindermantelförmiger Bereich
- 184c: dritter zylindermantelförmiger Bereich
- 184d: vierter zylindermantelförmiger Bereich
- 184e: fünfter zylindermantelförmiger Bereich
- 184f: sechster zylindermantelförmiger Bereich
- 186a: erster Ringflansch
- 186b: zweiter Ringflansch
- 186c: dritter Ringflansch
- 186d: vierter Ringflansch
- 186e: fünfter Ringflansch
- 186f: sechster Ringflansch
- 188a: erste lösbare Verbindung
- 188b: zweite lösbare Verbindung
- 188c: dritte lösbare Verbindung
- 188d: vierte lösbare Verbindung
- 188e: fünfte lösbare Verbindung
- 188f: sechste lösbare Verbindung
- 190a: erste Verbindungsbrücke
- 190b: zweite Verbindungsbrücke
- 190c: dritte Verbindungsbrücke
- 190d: vierte Verbindungsbrücke
- 190e: fünfte Verbindungsbrücke
- 190f: sechste Verbindungsbrücke
- 192a: erstes abtriebsseitiges Brückenelement
- 192b: zweites abtriebsseitiges Brückenelement
- 192c: drittes abtriebsseitiges Brückenelement
- 192d: viertes abtriebsseitiges Brückenelement
- 192e: fünftes abtriebsseitiges Brückenelement
- 192f: sechstes abtriebsseitiges Brückenelement
- 194a: erstes antriebsseitiges Brückenelement
- 194b: zweites antriebsseitiges Brückenelement
- 194c: drittes antriebsseitiges Brückenelement
- 194d: viertes antriebsseitiges Brückenelement
- 194e: fünftes antriebsseitiges Brückenelement
- 194f: sechstes antriebsseitiges Brückenelement
- 196a: erstes Verbindungselement
- 196b: zweites Verbindungselement
- 196c: drittes Verbindungselement
- 196d: viertes Verbindungselement
- 196e: fünftes Verbindungselement
- 196f: sechstes Verbindungselement
- 198a: erster Durchlass
- 198b: zweiter Durchlass
- 198c: dritter Durchlass
- 198d: vierter Durchlass
- 198e: fünfter Durchlass
- 198f: sechster Durchlass
- 200: Längsnut
- 202: Einführschräge
- 204: Schränkkronenring

## Patentansprüche

1. Biegevorrichtung (54) zum Verbiegen von aus einem ringförmigen Stator vorstehenden Drahtenden (34, 34a-34d) zum Bilden der Spulen des Stators, umfassend:
eine erste Aufnahme- und Dreheinrichtung (160a) mit einer ersten Aufnahme- und Dreheinheit (162a) zum Aufnehmen von ersten Drahtenden (34a) und zum Verdrehen der ersten Drahtenden (34a) zwecks Verbiegen in Umfangsrichtung und einem ersten drehbar angetriebenen sich in Umfangsrichtung erstreckenden Antriebselement (166a), wobei die erste Aufnahme- und Dreheinheit (162a) über eine erste lösbare Verbindung (188a) mit dem ersten Antriebselement (166a) verbunden ist;
eine zweite Aufnahme- und Dreheinrichtung (160b) mit einer zweiten Aufnahme- und Dreheinheit (162b) zum Aufnehmen von zu den ersten Drahtenden (34a) radial versetzten zweiten Drahtenden (34b) und zum Verdrehen der zweiten Drahtenden (34b) zwecks Verbiegen in Umfangsrichtung und einem zweiten drehbar angetriebenen sich in Umfangsrichtung erstreckenden Antriebselement (166b), wobei die zweite Aufnahme- und Dreheinheit (162b) über eine zweite lösbare Verbindung (188b) mit dem zweiten Antriebselement (166b) verbunden ist;
wobei die Aufnahme- und Dreheinheiten (162a, 162b) um eine gemeinsame Drehachse relativ zueinander drehbar sind und wobei die erste und die zweite lösbare Verbindung (188a, 188b) axial versetzt zueinander sind und jeweils sich radial erstreckende Verbindungsbrücken (190a, 190b) aufweisen, **dadurch gekennzeichnet, dass** die Verbindungsbrücken (190a, 190b) jeweils ein abtriebsseitiges Brückenelement (192a, 192b) an der Aufnahme- und Dreheinheit (162a, 162b) und ein antriebsseitiges Brückenelement (194a, 194b) an dem Antriebselement (166a, 166b) und wenigstens ein Verbindungselement (196a, 196b) zum lösbaren Verbinden des abtriebsseitigen und des antriebsseitigen Brückenelements (192a, 194a; 192b, 194b) aufweisen, wobei Durchlässe (198a, 198b) zwischen benachbarten abtriebsseitigen und zwischen benachbarten antriebsseitigen Brückenelementen (192a, 194a; 192b, 194b) vorgesehen sind, wobei in einer Montage- und Demontagerelativstellung der ersten und der zweiten Aufnahme- und Dreheinrichtung (160a, 160b) die Verbindungselemente (196b) der zweiten Aufnahme- und Dreheinrichtung (160b) durch die Durchlässe (198a) der ersten Aufnahme- und Dreheinrichtung (160a) hindurch zur Montage und Demontage zugänglich sind, und wobei die abtriebsseitigen Brückenelemente (192b) an der zweiten Aufnahme- und Dreheinheit (162b) zur Montage und Demontage derselben in axialer Richtung durch die Durchlässe (198a) zwischen den antriebsseitigen Brückenelementen (194a) der ersten Aufnahme- und Dreheinrichtung (160a) hindurchführbar sind.

2. Biegevorrichtung (54) nach Anspruch 1, **dadurch gekennzeichnet, dass** die abtriebsseitigen Brückenelemente (192b) der zweiten Aufnahme- und Dreheinheit (162b) eine Erstreckung in Umfangsrichtung haben, die gleich oder kleiner als die entsprechende lichte Weite der Durchlässe (198a) zwischen den antriebsseitigen Brückenelementen (194a) der ersten Aufnahme- und Dreheinrichtung (160a) ist und dass die antriebsseitigen Brückenelemente (194a) der ersten Aufnahme- und Dreheinrichtung (160a) eine Erstreckung in Umfangsrichtung haben, die gleich oder kleiner als die entsprechende lichte Weite der Durchlässe (198b) zwischen den abtriebsseitigen Brückenelementen (192b) der zweiten Aufnahme- und Dreheinheit (162b) ist.

3. Biegevorrichtung (54) nach einem der voranstehenden Ansprüche, **gekennzeichnet durch** eine dritte Aufnahme- und Dreheinrichtung (160c) mit einer dritten Aufnahme- und Dreheinheit (162c) zum Aufnehmen von zu den ersten (34a) und zweiten (34b) Drahtenden radial versetzten dritten Drahtenden (34c) und zum Verdrehen der dritten Drahtenden (34c) zwecks Verbiegen in Umfangsrichtung und einem dritten drehbar angetriebenen sich in Umfangsrichtung erstreckenden Antriebselement (166c), wobei die dritte Aufnahme- und Dreheinheit (162c) über eine dritte lösbare Verbindung (188c) mit dem dritten Antriebselement (166c) verbunden ist, die eine Mehrzahl von lösbaren Verbindungselementen (196c) hat, wobei die zweite lösbare Verbindung (188b) axial zwischen der ersten lösbaren Verbindung (188a) und der dritten lösbaren Verbindung (188c) angeordnet ist und wobei die Durchlässe (198a, 198b) zwischen in Umfangsrichtung benachbarten antriebsseitigen und benachbarten abtriebsseitigen Brückenelementen (192a, 194a; 192b, 194b) der ersten und der zweiten Aufnahme- und Dreheinrichtung (160a, 160b) und die Verbindungselemente (196c) der dritten Aufnahme- und Dreheinrichtung (160c) derart angeordnet sind, dass in einer zweiten Montage- und Demontagerelativdrehstellung der Aufnahme- und Dreheinrichtungen (160a, 160b, 160c) die Verbindungselemente (196c) der dritten Aufnahme- und Dreheinrichtung (160c) durch die miteinander ausgerichteten Durchlässe (198a, 198b) der ersten und der zweiten Aufnahme- und Dreheinrichtung (160a, 160b) hindurch zum Montieren und Demontieren zugänglich sind.

4. Biegevorrichtung (54) nach Anspruch 3, **dadurch gekennzeichnet, dass** die dritte Verbindung (188c) dritte Verbindungsbrücken (190c) aufweist, die jeweils ein abtriebsseitiges Brückenelement (192c) an der dritten Aufnahme- und Dreheinheit (162c) und ein antriebsseitiges Brückenelement (194c) an dem dritten Antriebselement (166c) und ein lösbares Verbindungselement (196c) zum Verbinden des antriebsseitigen und des abtriebsseitigen Brückenelements (192c, 194c) aufweisen, wobei Durchlässe (198c) zwischen in Umfangsrichtung benachbarten antriebsseitigen und benachbarten abtriebsseitigen Brückenelementen (192c, 194c) vorgesehen sind.

5. Biegevorrichtung (54) nach Anspruch 4, **gekennzeichnet durch** eine vierte Aufnahme- und Dreheinrichtung (160d) mit einer vierten Aufnahme- und Dreheinheit (162d) zum Aufnehmen von zu den ersten, zweiten und dritten Drahtenden (34a, 34b, 34c) radial versetzten vierten Drahtenden (34d) und zum Verdrehen der vierten Drahtenden (34d) zwecks Verbiegen in Umfangsrichtung und einem vierten drehbar angetriebenen sich in Umfangsrichtung erstreckenden Antriebselement (166d), wobei die vierte Aufnahme- und Dreheinheit (162d) über eine vierte lösbare Verbindung (188d) mit dem vierten Antriebselement (166d) verbunden ist, die eine Mehrzahl von lösbaren Verbindungselementen (196d) hat, wobei die zweite und dritte lösbare Verbindung (188b, 188c) axial zwischen der ersten lösbaren Verbindung (188a) und der vierten lösbaren Verbindung (188d) vorgesehen sind und wobei die Durchlässe (198a, 198b, 198c) zwischen in Umfangsrichtung benachbarten antriebsseitigen und benachbarten abtriebsseitigen Brückenelementen (192a, 194a; 192b, 194b; 192c, 194c) der ersten, zweiten und dritten Aufnahme- und Dreheinrichtung (160a, 160b, 160c) und die Verbindungselemente (196d) der vierten Aufnahme- und Dreheinrichtung (160d) derart angeordnet sind, dass in einer dritten Montage- und Demontagerelativdrehstellung der Aufnahme- und Dreheinrichtungen (160a, 160b, 160c, 160d) die Verbindungselemente (196d) der vierten Aufnahme- und Dreheinrichtung (160d) durch die miteinander ausgerichteten Durchlässe (198a, 198b, 198c) der ersten, zweiten und dritten Aufnahme- und Dreheinrichtung (160a, 160b, 160c) hindurch zum Montieren und Demontieren zugänglich sind.

6. Biegevorrichtung (54) nach einem der voranstehenden Ansprüche, **gekennzeichnet durch** eines, mehrere oder alle der Merkmale:
6.1 dass die lösbaren Verbindungen (188a-188f) der Aufnahme- und Dreheinrichtungen (160a-160f) gleichartig ausgestaltet sind;
6.2 dass die Verbindungselemente (196a-196f) Schrauben oder Gewindebolzen mit Werkzeugangriffsausbildungen aufweisen, wobei ein Werkzeugzugang zu den Werkezugangriffsausbildungen durch die Durchlässe (198a-198e) der auf der Seite der Werkzeugangriffsausbildungen axial versetzt angeordneten Verbindung(en) (188a-188e) zugänglich ist;
6.3 dass die Brückenelemente (192a-192f; 194a-194f) durch sich radial erstreckende Vorsprünge oder Platten gebildet sind;
6.4 dass die abtriebsseitigen Brückenelemente (192a- 192f) durch Anschraubflansche mit Bohrungen und die antriebsseitigen Brückenelemente (194a-194f) durch Anschraubflansche mit Gewindebohrungen gebildet sind;
6.5 dass die abtriebsseitigen Brückenelemente (192a-192f) axial versetzt zu den antriebsseitigen Brückenelementen (194a-194f) angeordnet sind;
6.6 dass eine Anzahl abtriebsseitiger Brückenelemente (192a-192f) ringförmig um die Aufnahme- und Dreheinheit (162a-162f) angeordnet ist und die gleiche Anzahl antriebsseitiger Brückenelemente (194a-194f) ringförmig entlang eines radial inneren Umfangs des Antriebselements (166a-166f) angeordnet ist;
6.7 dass die Brückenelemente (192a-192f, 194a-194f) und die Durchlässe (198a-198f) dazwischen eine Zahnstruktur bilden, die eine gleiche Zahnteilung aufweist;
6.8 dass die Aufnahme- und Dreheinheiten (162a-162f) konzentrisch zueinander angeordnet und/oder ringförmig ausgebildet sind;
6.9 dass die Antriebselemente (166a-166f) als Antriebsringe ausgebildet sind;
6.10 dass die Aufnahme- und Dreheinheiten (162a-162f) Schränkkronen (180a-180f) zum Aufnehmen und Verschränken der Drahtenden (34a-34d) in Umfangsrichtung aufweisen, die ringförmig ausgebildet sind und über den Umfang verteilt mehrere Aufnahmeöffnungen (176) zum Einführen der Drahtenden (34a-34d) aufweisen; und/oder
6.11 dass die Aufnahme- und Dreheinheit (162b-162f), die relativ zu einer anderen Aufnahme- und Dreheinheit (162a-162e) gesehen Drahtendenaufnahmen (182) mit kleinerem radialen Abstand zu der Drehachse hat, eine größere axiale Erstreckung als die andere Aufnahme- und Dreheinheit (162a-162e) hat.

7. Biegevorrichtung (54) nach einem der voranstehenden Ansprüche, **gekennzeichnet durch** eine Steuerung (70) zum Steuern der Drehung der Antriebselemente (166a-166f), wobei die Steuerung (70) einen Montage- und/oder Demontagemodus hat,
7.1. in dem die Antriebselemente (166a-166f) in die wenigstens eine Montage- und Demontagerelativdrehstellung verfahren werden und/oder
7.2 in dem die Antriebselemente (166a-166f) schrittweise in unterschiedliche Montage- und Demontagerelativstellungen zum Montieren oder Demontieren unterschiedlicher Aufnahme- und Dreheinheiten (162a-162f) bewegt werden.

8. Demontageverfahren für die Biegevorrichtung (54) nach einem der voranstehenden Ansprüche, **gekennzeichnet durch** die Schritte:
a) Demontieren der ersten Aufnahme- und Dreheinheit (162a) durch Lösen der Verbindungselemente (196a) und Entfernen der ersten Aufnahme- und Dreheinheit (162a),
b) Verfahren in eine Montage- und Demontagestellung, in der die Verbindungselemente (196b) der zweiten Aufnahme- und Dreheinrichtung (160b) zugänglich sind,
c) Lösen der Verbindungselemente (196b) der zweiten Aufnahme- und Dreheinrichtung (160b) in der Montage- und Demontagestellung und
d) Entfernen der zweiten Aufnahme- und Dreheinheit (162b),
wobei die Reihenfolge zumindest der Schritte a) und b) beliebig ist.

9. Demontageverfahren nach Anspruch 8, für eine Biegevorrichtung (54) nach einem der Ansprüche 1 bis 7, **dadurch gekennzeichnet, dass** Schritt d) umfasst:
Entfernen der zweiten Aufnahme- und Dreheinheit (162b) in Richtung der Drehachse, wobei die abtriebsseitigen Brückenelemente (192b) durch die Durchlässe (198a) zwischen den antriebsseitigen Brückenelementen (194a) der ersten Aufnahme- und Dreheinrichtung (160a) hindurchgeführt werden.

## Claims

1. Bending device (54) for bending wire ends (34, 34a-34d) projecting from an annular stator for forming the coils of the stator, the device comprising:
a first receiving and rotating device (160a) with a first receiving and rotating unit (162a) for receiving first wire ends (34a) and for twisting the first wire ends (34a) for the purpose of bending in the circumferential direction, and a first drive element (166a) which is rotatably driven and extends in the circumferential direction, wherein the first receiving and rotating unit (162a) is connected to the first drive element (166a) via a first detachable connection (188a);
a second receiving and rotating device (160b) with a second receiving and rotating unit (162b) for receiving second wire ends (34b) radially offset from the first wire ends (34a) and for twisting the second wire ends (34b) for the purpose of bending in the circumferential direction, and a second drive element (166b) which is rotatably driven and extends in the circumferential direction, wherein the second receiving and rotating unit (162b) is connected to the second drive element (166b) via a second detachable connection (188b);
wherein the receiving and rotating units (162a, 162b) are rotatable relative to each other about a common axis of rotation and wherein the first and the second detachable connection (188a, 188b) are axially offset from each other and each have radially extending connecting bridges (190a, 190b),
**characterized in that**
the connecting bridges (190a, 190b) each comprise a driven-side bridge element (192a, 192b) on the receiving and rotating unit (162a, 162b) and a driving-side bridge element (194a, 194b) on the drive element (166a, 166b) and at least one connecting element (196a, 196b) for detachably connecting the driven-side and the driving-side bridge elements (192a, 194a; 192b, 194b), wherein passages (198a, 198b) are provided between adjacent driven-side and between adjacent driving-side bridge elements (192a, 194a; 192b, 194b), wherein in a assembling and disassembling relative position of the first and the second receiving and rotating device (160a, 160b), the connecting elements (196b) of the second receiving and rotating device (160b) are accessible for assembling and disassembling through the passages (198a) of the first receiving and rotating device (160a), and wherein the driven-side bridge elements (192b) on the second receiving and rotating unit (162b) can be passed in the axial direction through the passages (198a) between the driving-side bridge elements (194a) of the first receiving and rotating device (160a) for assembling and disassembling the same.

2. Bending device (54) according to claim 1, **characterized in that** the driven-side bridge elements (192b) of the second receiving and rotating unit (162b) have an extent in the circumferential direction equal to or smaller than the clear width of the passages (198a) between the driving-side bridge elements (194a) of the first receiving and rotating device (160a), and that the driving-side bridge elements (194a) of the first receiving and rotating device (160a) have an extent in the circumferential direction equal to or smaller than the corresponding clear width of the passages (198b) between the driven-side bridge elements (192b) of the second receiving and rotating unit (162b).

3. Bending device (54) according to any of the preceding claims, **characterized by** a third receiving and rotating device (160c) with a third receiving and rotating unit (162c) for receiving third wire ends (34c) radially offset from the first (34a) and the second (34b) wire ends and for twisting the third wire ends (34c) for the purpose of bending in the circumferential direction, and a third drive element (166c) which is rotatably driven and extends in the circumferential direction, wherein the third receiving and rotating unit (162c) is connected to the third drive element (166c) via a third detachable connection (188c) which comprises a plurality of detachable connecting elements (196c), wherein the second detachable connection (188b) is arranged axially between the first detachable connection (188a) and the third detachable connection (188c) and wherein the passages (198a, 198b) between the circumferentially adjacent driving-side and the circumferentially adjacent driven-side bridge elements (192a, 194a; 192b, 194b) of the first and the second receiving and rotating device (160a, 160b) and the connecting elements (196c) of the third receiving and rotating device (160c) are arranged in such a way that in a second assembling and disassembling relative position of the receiving and rotating units (160a, 160b, 160c), the connecting elements (196c) of the third receiving and rotating device (160c) are accessible through the mutually aligned passages (198a, 198b) of the first and the second receiving and rotating device (160a, 160b) for assembling and disassembling.

4. Bending device (54) according to claim 3, **characterized in that** the third connection (188c) comprises third connecting bridges (190c) which each comprise a driven-side bridge element (192c) on the third receiving and rotating device (162c) and a driving-side bridge element (194c) on the third drive element (166c) and a detachable connecting element (196c) for connecting the drive-side and the driven-side bridge element (192c, 194c), wherein passages (198c) are provided between circumferentially adjacent driving-side and circumferentially adjacent driven-side bridge elements (192c, 194c).

5. Bending device (54) according to claim 4, **characterized by** a fourth receiving and rotating device (160c) with a fourth receiving and rotating unit (162) for receiving fourth wire ends (34d) radially offset from the first, second and third wire ends (34a, 34b, 34c) and for twisting the fourth wire ends (34d) for the purpose of bending in the circumferential direction, and a forth drive element (166d) which is rotatably driven and extends in the circumferential direction, wherein the fourth receiving and rotating unit (162d) is connected to the fourth drive element (166d) via a fourth detachable connection (188d) which comprises a plurality of detachable connecting elements (196d), wherein the second and the third detachable connection (188b, 188c) are provided axially between the first detachable connection (188a) and the fourth detachable connection (188d) and wherein the passages (198a, 198b, 198c) are arranged between circumferentially adjacent driving-side and circumferentially adjacent driven-side bridge elements (192a, 194a; 192b, 194b; 192c, 194c) of the first, second and third receiving and rotating device (160a, 160b, 160c), and the connecting elements (196d) of the fourth receiving and rotating device (160d) are arranged in such a way that in a third assembling and disassembling relative position of the receiving and rotating devices (160a, 160b, 160c, 160d), the connecting elements (196d) of the fourth receiving and rotating device (160d) are accessible through mutually aligned passages (198a, 198b, 198c) of the first, second and third receiving and rotating device (160a, 160b, 160c) for assembling and disassembling.

6. Bending device (54) according to any of the preceding claims, **characterized by** one, more or all of the features:
6.1 that the detachable connections (188a-188f) of the receiving and rotating devices are of similar design;
6.2 that the connecting elements (196a-196f) comprise screws or threaded bolts with tool engagement features, wherein a tool access to said tool engagement features is accessible through the passages (198a-198e) of the connection(s) (188a-188e) arranged axially offset on the side of the tool engagement features;
6.3 that the bridge elements (192a-192f; 194a-194f) are formed by radially extending projections or plates;
6.4 that the driven-side bridge elements (192a-192f) are formed by screw-on flanges with bores and the driving-side bridge elements (194a-194f) are formed by screw-on flanges with threaded bores;
6.5 that the driven-side bridge elements (192a-192f) are arranged axially offset from the driving-side bridge elements (194a-194f);
6.6 that a number of driven-side bridge elements (192a-192f) are arranged annularly around the receiving and rotating unit (162a-162f) and an equal number of driving-side bridge elements (194a-194f) are arranged annularly along a radially inner circumference of the driving element (166a-166f);
6.7 that the bridge elements (192a-192f, 194a-194f) and the passages (198a-198f) define a tooth structure between them, which tooth structure has an equal tooth pitch;
6.8 that the receiving and rotating units (162a-162f) are arranged concentrically with each other and/or are ring-shaped;
6.9 that the driving elements (166a-166f) are designed as driving rings;
6.10 that the receiving and rotating units (162a-162f) have setting tops (180a-180f) for receiving and setting the wire ends (34a-34d) in the circumferential direction, which setting tops are ring-shaped and have several circumferentially distributed receiving openings (176) for insertion of the wire ends (34a-34d); and/or
6.11 that the receiving and rotating unit (162b-162f) which, viewed relative to another receiving and rotating unit (162a-162e), has wire end receptacles (182) with a smaller radial distance from the axis of rotation, has a greater axial extent than the other receiving and rotating unit (162a-162e).

7. Bending device (54) according to any of the preceding claims, **characterized by** a control system (70) for controlling the rotation of the driving elements (166a-166f), which control system (70) has an assembling and/or disassembling mode in which
7.1 the driving elements (166a-166f) are moved to the at least one assembling and disassembling relative position and/or
7.2 the driving elements (166a-166f) are gradually moved to different assembling and disassembling relative positions for assembling or disassembling different receiving and rotating units (162a-162f).

8. Disassembling method for the bending device (54) according to any of the preceding claims, **characterized by** the steps of:
a) disassembling the first receiving and rotating unit (162a) by loosening the connecting elements (196a) and removing the first receiving and rotating unit (162a),
b) moving to an assembling and disassembling position in which the connecting elements (196b) of the second receiving and rotating device (160) are accessible,
c) loosening the connecting elements of the second receiving and rotating device (160b) in the assembling and disassembling position and
d) removing the second receiving and rotating unit (162b), the order of steps a) and b) being arbitrary.

9. Disassembling method according to claim 8, for a bending device (54) according to any of claims 1 to 7, **characterized in that** step d) comprises:
removing the second receiving and rotating unit (162b) in the direction of the rotating axis, with the driven-side bridge elements (192b) being passed through the passages (198a) between the driving-side bridge elements (194a) of the first receiving and rotating unit (160a).

## Revendications

1. Dispositif de pliage (54) pour plier des extrémités de fil (34, 34a-34d) saillant d'un stator annulaire pour former les bobines du stator, le dispositif comprenant:
un premier dispositif de réception et de rotation (160a) avec une première unité de réception et de rotation (162a) pour recevoir des premières extrémités de fil (34a) et pour tordre les premières extrémités de fil (34a) dans le but de les plier dans la direction circonférentielle, et un premier élément d'entraînement (166a) qui est entraîné en rotation et s'étend dans la direction circonférentielle, dans lequel la première unité de réception et de rotation (162a) est reliée au premier élément d'entraînement (166a) par l'intermédiaire d'une première liaison amovible (188a);
un deuxième dispositif de réception et de rotation (160b) avec une deuxième unité de réception et de rotation (162b) pour recevoir des deuxièmes extrémités de fil (34b) décalées radialement par rapport aux premières extrémités de fil (34a) et pour tordre les deuxièmes extrémités de fil (34b) dans le but de les plier dans la direction circonférentielle, et un deuxième élément d'entraînement (166b) qui est entraîné en rotation et s'étend dans la direction circonférentielle, dans lequel la deuxième unité de réception et de rotation (162b) est connectée au deuxième élément d'entraînement (166b) par l'intermédiaire d'une deuxième liaison amovible (188b);
dans lequel les unités de réception et de rotation (162a, 162b) peuvent tourner l'une par rapport à l'autre autour d'un axe de rotation commun et dans lequel la première et la deuxième liaison amovible (188a, 188b) sont décalées axialement l'une par rapport à l'autre et ont chacune des ponts de liaison (190a, 190b) s'étendant radialement,
**caractérisé en ce que**
les ponts de liaison (190a, 190b) comprennent chacun un élément de pont côté sortie (192a, 192b) sur l'unité de réception et de rotation (162a, 162b) et un élément de pont côté entraînement (194a, 194b) sur l'élément d'entraînement (166a, 166b) et au moins un élément de liaison (196a, 196b) pour relier de manière amovible les éléments de pont côté sortie et côté entraînement (192a, 194a; 192b, 194b), dans lequel des passages (198a, 198b) sont prévus entre des éléments de pont adjacents du côté sortie et entre des éléments de pont adjacents du côté entraînement (192a, 194a; 192b, 194b), dans lequel dans une position relative de montage et de démontage du premier et du second dispositif de réception et de rotation (160a, 160b), les éléments de liaison (196b) du second dispositif de réception et de rotation (160b) sont accessibles pour le montage et le démontage à travers les passages (198a) du premier dispositif de réception et de rotation (160a), et dans lequel les éléments de pont côté sortie (192b) sur la deuxième unité de réception et de rotation (162b) peuvent être passés dans la direction axiale à travers les passages (198a) entre les éléments de pont côté entraînement (194a) du premier dispositif de réception et de rotation (160a) pour monter et démonter ceux-ci.

2. Dispositif de pliage (54) selon la revendication 1, **caractérisé en ce que** les éléments de pont (192b) côté sortie de la deuxième unité de réception et de rotation (162b) ont une étendue dans la direction circonférentielle égale ou inférieure à la largeur libre des passages (198a) entre les éléments de pont (194a) côté entraînement du premier dispositif de réception et de rotation (160a), et que les éléments de pont côté entraînement (194a) du premier dispositif de réception et de rotation (160a) ont une étendue dans la direction circonférentielle égale ou inférieure à la largeur libre correspondante des passages (198b) entre les éléments de pont côté sortie (192b) de la deuxième unité de réception et de rotation (162b).

3. Dispositif de pliage (54) selon l'une quelconque des revendications précédentes, **caractérisé par** un troisième dispositif de réception et de rotation (160c) avec une troisième unité de réception et de rotation (162c) pour recevoir des troisièmes extrémités de fil (34c) décalées radialement par rapport aux premières (34a) et deuxièmes (34b) extrémités de fil et pour tordre les troisièmes extrémités de fil (34c) en vue du pliage dans la direction circonférentielle, et un troisième élément d'entraînement (166c) entraîné en rotation et s'étendant dans la direction circonférentielle, dans lequel la troisième unité de réception et de rotation (162c) est reliée au troisième élément d'entraînement (166c) par l'intermédiaire d'une troisième liaison amovible (188c) qui comprend une pluralité d'éléments de liaison amovibles (196c), dans lequel la deuxième liaison amovible (188b) est disposée axialement entre la première liaison amovible (188a) et la troisième liaison amovible (188c) et dans lequel les passages (198a, 198b) entre les éléments de pont (192a, 194a; 192b, 194b) des premier et deuxième dispositifs de réception et de rotation (160a, 160b) et les éléments de liaison (196c) du troisième dispositif de réception et de rotation (160c) sont disposés de telle sorte que dans une deuxième position relative de montage et de démontage des unités de réception et de rotation (160a, 160b, 160c), les éléments de liaison (196c) du troisième dispositif de réception et de rotation (160c) sont accessibles à travers les passages mutuellement alignés (198a, 198b) des premier et deuxième dispositifs de réception et de rotation (160a, 160b) pour le montage et le démontage.

4. Dispositif de pliage (54) selon la revendication 3, **caractérisé en ce que** la troisième liaison (188c) comprend des troisièmes ponts de liaison (190c) qui comprennent chacun un élément de pont côté sortie (192c) sur le troisième dispositif de réception et de rotation (162c) et un élément de pont côté entraînement (194c) sur le troisième élément d'entraînement (166c) et un élément de liaison amovible (196c) pour connecter l'élément de pont côté entraînement et l'élément de pont côté sortie (192c, 194c), dans lequel des passages (198c) sont prévus entre des éléments de pont côté entraînement circonférentiellement adjacents et des éléments de pont côté sortie circonférentiellement adjacents (192c, 194c).

5. Dispositif de pliage (54) selon la revendication 4, **caractérisé par** un quatrième dispositif de réception et de rotation (160c) avec une quatrième unité de réception et de rotation (162) pour recevoir des quatrièmes extrémités de fil (34d) décalées radialement par rapport aux première, deuxième et troisième extrémités de fil (34a, 34b, 34c) et pour tordre les quatrièmes extrémités de fil (34d) en vue du pliage dans la direction circonférentielle, et un quatrième élément d'entraînement (166d) qui est entraîné en rotation et s'étend dans la direction circonférentielle, dans lequel la quatrième unité de réception et de rotation (162d) est reliée au quatrième élément d'entraînement (166d) par une quatrième liaison amovible (188d) qui comprend une pluralité d'éléments de liaison amovibles (196d), dans lequel la deuxième et la troisième liaison amovible (188b, 188c) sont prévus axialement entre la première liaison amovible (188a) et la quatrième liaison amovible (188d) et dans lequel les passages (198a, 198b, 198c) sont agencés entre des éléments de pont côté entraînement adjacents circonférentiellement et des éléments de pont côté sortie adjacents circonférentiellement (192a, 194a; 192b, 194b; 192c, 194c) des premier, deuxième et troisième dispositifs de réception et de rotation (160a, 160b, 160c), et les éléments de liaison (196d) du quatrième dispositif de réception et de rotation (160d) sont disposés de telle sorte que dans une troisième position relative de montage et de démontage des dispositifs de réception et de rotation (160a, 160b, 160c, 160d), les éléments de liaison (196d) du quatrième dispositif de réception et de rotation (160d) sont accessibles à travers des passages mutuellement alignés (198a, 198b, 198c) des premier, deuxième et troisième dispositifs de réception et de rotation (160a, 160b, 160c) pour le montage et le démontage.

6. Dispositif de pliage (54) selon l'une quelconque des revendications précédentes, **caractérisé par** une, plusieurs ou toutes les caractéristiques:
6.1 que les liaisons amovibles (188a-188f) des dispositifs de réception et de rotation sont du même type;
6.2 que les éléments de liaison (196a-196f) comprennent des vis ou des boulons filetés avec des dispositifs d'engagement d'outil, dans lesquels un accès d'outil auxdits dispositifs d'engagement d'outil est accessible à travers les passages (198a-198e) de la ou des liaison(s) (188a-188e) disposés de manière axialement décalée du côté des dispositifs d'engagement d'outil;
6.3 que les éléments de pont (192a-192f ; 194a-194f) sont formés par des saillies ou des plaques s'étendant radialement;
6.4 que les éléments de pont du côté sortie (192a-192f) sont formés par des brides vissées avec des alésages et les éléments de pont du côté entraînement (194a-194f) sont formés par des brides vissées avec des alésages filetés;
6.5 que les éléments de pont côté sortie (192a-192f) sont disposés de manière décalée axialement par rapport aux éléments de pont côté entraînement (194a-194f);
6.6 qu'un certain nombre d'éléments de pont côté sortie (192a-192f) sont disposés de manière annulaire autour de l'unité de réception et de rotation (162a-162f) et un nombre égal d'éléments de pont côté entraînement (194a-194f) sont disposés de manière annulaire le long d'une circonférence radialement intérieure de l'élément d'entraînement (166a-166f);
6.7 que les éléments de pont (192a-192f, 194a-194f) et les passages (198a-198f) définissent entre eux une structure de dents, laquelle structure de dents a un pas de dent égal;
6.8 que les unités de réception et de rotation (162a-162f) sont disposées concentriquement les unes par rapport aux autres et/ou sont de forme annulaire;
6.9 que les éléments d'entraînement (166a-166f) sont conçus comme des anneaux d'entraînement ;
6.10 que les unités de réception et de rotation (162a-162f) présentent des couronnes de pliage en croisé (180a-180f) pour recevoir et plier en croisé les extrémités de fil (34a-34d) dans la direction circonférentielle, lesquels couronnes de pliage en croisé étant de forme annulaire et présentant plusieurs ouvertures de réception (176) réparties dans la direction circonférentielle pour l'insertion des extrémités de fil (34a-34d); et/ou
6.11 que l'unité de réception et de rotation (162b-162f) qui, vue par rapport à une autre unité de réception et de rotation (162a-162e), a des logements d'extrémité de fil (182) avec une distance radiale plus petite par rapport à l'axe de rotation, a une plus grande étendue axiale que l'autre unité de réception et de rotation (162a-162e).

7. Dispositif de pliage (54) selon l'une quelconque des revendications précédentes, **caractérisé par** un système de commande (70) pour commander la rotation des éléments d'entraînement (166a-166f), lequel système de commande (70) présente un mode de montage et/ou de démontage dans lequel
7.1 les éléments d'entraînement (166a-166f) sont déplacés vers au moins une position relative de montage et de démontage et/ou
7.2 les éléments d'entraînement (166a-166f) sont déplacés progressivement vers différentes positions relatives de montage et de démontage pour monter ou démonter différentes unités de réception et de rotation (162a-162f).

8. Procédé de démontage pour le dispositif de pliage (54) selon l'une quelconque des revendications précédentes, **caractérisé par** les étapes comprenant:
a) démonter la première unité de réception et de rotation (162a) en desserrant les éléments de liaison (196a) et en enlevant la première unité de réception et de rotation (162a),
b) déplacer vers une position de montage et de démontage dans laquelle les éléments de liaison (196b) du second dispositif de réception et de rotation (160) sont accessibles,
c) desserrer les éléments de liaison du deuxième dispositif de réception et de rotation (160b) dans la position de montage et de démontage et
d) retirer le deuxième dispositif de réception et de rotation (162b), l'ordre des étapes a) et b) étant arbitraire.

9. Procédé de démontage selon la revendication 8, pour un dispositif de pliage (54) selon l'une quelconque des revendications 1 à 7, **caractérisé en ce que** l'étape d) comprend:
retirer la deuxième unité de réception et de rotation (162b) dans la direction de l'axe de rotation, les éléments de pont côté entraînement (192b) étant passés à travers les passages (198a) entre les éléments de pont côté entraînement (194a) de la première unité de réception et de rotation (160a).
